(19) Europäisches Patentamt / European Patent Office / Office européen des brevets

(11) **EP 3 504 057 B1**

(12) **FASCICULE DE BREVET EUROPEEN**

(45) Date de publication et mention de la délivrance du brevet:
**03.07.2024 Bulletin 2024/27**

(21) Numéro de dépôt: **17762162.0**

(22) Date de dépôt: **22.08.2017**

(51) Classification Internationale des Brevets (IPC):
**B30B 15/06** (2006.01)    **B30B 15/34** (2006.01)
**H01M 10/058** (2010.01)    **H01M 10/04** (2006.01)
**H01M 10/0525** (2010.01)    **H01M 4/04** (2006.01)
**B29C 35/08** (2006.01)

(52) Classification Coopérative des Brevets (CPC):
**B30B 15/064; B29C 35/0805; B30B 15/34;
H01M 10/0468; H01M 10/0525; H01M 10/058;**
Y02E 60/10; Y02P 70/50

(86) Numéro de dépôt international:
**PCT/FR2017/052252**

(87) Numéro de publication internationale:
**WO 2018/037185 (01.03.2018 Gazette 2018/09)**

(54) **OUTIL DE PRESSAGE A CHAUD, SON PROCEDE DE MISE EN OEUVRE, INSTALLATION ET PROCEDE DE FABRICATION CORRESPONDANTS**

PRESSWERKZEUG ZUM HEISSPRESSEN, VERFAHREN ZUM BETRIEB DAVON SOWIE ENTSPRECHENDE INSTALLATION UND VERFAHREN ZUR HERSTELLUNG

HOT-PRESSING PRESS TOOL, METHOD OF OPERATING IT, AND CORRESPONDING INSTALLATION AND METHOD OF MANUFACTURE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.08.2016 FR 1657911**

(43) Date de publication de la demande:
**03.07.2019 Bulletin 2019/27**

(73) Titulaire: **I-TEN
69570 Dardilly (FR)**

(72) Inventeurs:
• **GABEN, Fabien
69570 Dardilly (FR)**

• **BURRY, Jean-Michel
01460 Port (FR)**

(74) Mandataire: **Regimbeau
20, rue de Chazelles
75847 Paris Cedex 17 (FR)**

(56) Documents cités:
**DE-U1-202006 008 399**    **FR-A1- 2 956 523**
**US-A- 2 312 232**    **US-A1- 2005 284 320**
**US-A1- 2006 198 917**    **US-A1- 2010 104 682**
**US-A1- 2016 183 327**

## Description

## Domaine technique de l'invention

L'invention concerne un outil de pressage à chaud, destiné à être monté sur une presse. Elle concerne plus particulièrement, mais non exclusivement, un tel outil de pressage qui est destiné à opérer sous atmosphère contrôlée, notamment sous vide. L'invention a également pour objet un procédé de mise en oeuvre d'un tel outil de pressage à chaud. Elle vise également une installation de fabrication d'objets, comprenant un tel outil de pressage à chaud. Une utilisation préférée, mais non exclusive, de cette installation est la fabrication de batteries à ions de lithium entièrement solides. L'invention a enfin trait à un procédé de mise en oeuvre d'une telle installation.

## Etat de la technique

De manière connue, un outil de pressage à chaud comprend deux parties, en général respectivement supérieure et inférieure, qui sont montées sur des plateaux de presse respectifs. Ces derniers sont mobiles l'un par rapport à l'autre sous l'action de moyens de déplacement, typiquement des vérins. Les deux parties d'outil peuvent donc adopter une position mutuellement éloignée, ainsi qu'une position mutuellement rapprochée dans laquelle elles délimitent une chambre de réception, en vue du pressage des éléments constitutifs de l'objet à réaliser.

Par ailleurs un tel outil de pressage à chaud est équipé de moyens de chauffage, permettant de porter le volume intérieur de la chambre précitée à une température appropriée pour une opération de pressage satisfaisante. Enfin, dans le cas où cet outil fonctionne sous vide, il est prévu des moyens destinés à mettre en dépression le volume intérieur de la chambre. Les valeurs numériques respectives de pression exercée, de température et éventuellement de dépression dans la chambre, sont fonction de l'outil et de la nature des objets à fabriquer.

Des outils de pressage à chaud du type précité ont déjà été proposés, pour la réalisation d'articles de natures diverses. On citera par exemple CN103158252B et CN101758638 qui traitent de la fabrication de guides d'onde plats, JP5576636 qui a pour objet la production de pièces en résine, EP2251188 qui concerne la réalisation d'objets en forme de plaquette, ou encore CN101468370B qui décrit une production d'alliages. Dans ces différents documents, le chauffage est mis en oeuvre par voie électrique, ou encore par induction.

Les outils de l'état de la technique, mentionnés ci-dessus, présentent notamment une limite majeure sur le plan thermique. En effet, leur mise en oeuvre s'accompagne d'une dissipation significative de la chaleur produite, en dehors de la zone cible où se trouvent les éléments constitutifs de la pièce à presser. Par conséquent, étant donné la gamme de températures auxquelles est opéré le procédé de pressage, il est nécessaire de produire une quantité de chaleur particulièrement élevée.

Par ailleurs, dans l'art antérieur décrit ci-dessus, la température en service est très élevée, non seulement dans la zone de pressage proprement dite, mais également au voisinage de cette dernière. Dans ces conditions la réalisation mécanique des éléments auxiliaires nécessaires au bon fonctionnement de l'outil, tels des joints ou analogues, implique un compromis.

On peut tout d'abord choisir de placer ces éléments à distance réduite de la zone de pressage, afin de limiter l'encombrement global. Dans ce cas, ils doivent présenter une résistance thermique importante, ce qui est désavantageux en termes de coûts de fabrication. A titre d'alternative, on peut choisir de réaliser de tels éléments auxiliaires à relativement moindres frais. Dans ce cas, leur faible résistance thermique implique de les placer à distance substantielle de la zone de pressage, ce qui augmente de manière conséquente l'encombrement de l'outil.

On a en outre proposé, par US 7 473 088, un dispositif de micro- ou nano-impression, comprenant des sources de chauffage par radiation optique. Cependant l'enseignement de ce document n'apporte pas de solution satisfaisante au problème de dissipation thermique, présenté immédiatement ci-dessus.

Un domaine d'application préféré, mais non exclusif, de la présente invention est la réalisation de batteries à ions de lithium entièrement solides, dénommées dans le présent document batteries Li-ion entièrement solides. De telles batteries sont essentiellement constituées d'au moins une cellule élémentaire, dont chacune est formée d'un ensemble de trois couches, à savoir une couche d'anode, une couche de cathode, ainsi qu'une couche intermédiaire d'électrolyte.

L'invention trouve son application aux deux modes principaux de fabrication d'une telle batterie, faisant intervenir des gammes différentes de pression et de température. On peut tout d'abord opérer à haute température, typiquement entre 400°C et 700°C, et haute pression, typiquement entre 20 et 200 MPa. Dans ce cas, les couches précitées sont assemblées, soit par frittage, soit par « diffusion bonding » (ou soudure par diffusion). A titre d'alternative, on peut également opérer à plus basse température, typiquement entre 100°C et 200°C, et plus basse pression, typiquement entre 5 et 10 MPa. Dans ce cas, les couches précitées sont assemblées, soit par collage, soit par polymérisation.

FR 2 956 523 décrit un procédé de fabrication d'une batterie entièrement solide, faisant intervenir un assemblage par frittage. Selon ce procédé, les trois couches précitées sont placées dans une matrice, puis sont soumises à une pression de 100 MPa pendant 7 minutes. Cela provoque le frittage de ces couches entre elles, ce qui leur confère la cohésion souhaitée. L'opération de pressage est mise en oeuvre sous vide, avec un chauffage progressif permettant d'atteindre une température de 650°C. Les rampes de température sont obtenues par un chauffage de type électrique, à savoir par application de courants directs pulsés.

On citera en outre US 7,695,865 qui décrit un procédé de production d'une batterie, dans lequel l'assemblage des couches minces est mis en oeuvre par collage. Ce procédé fait intervenir un chauffage, au moyen d'un dispositif de nature optique. La température de pressage est inférieure ou égale à 120°C, alors que la pression est comprise entre 50 et 500 kg/cm.

Ces deux dernières solutions présentent cependant certaines limites. En effet, quand bien même FR 2 956 523 et US 7,695,865 apportent des précisions substantielles sur le procédé de fabrication, ils se contentent de décrire l'installation correspondante de manière schématique. A la lecture de ces documents, il n'est donc pas possible de retirer des informations significatives, au plan constructif. En particulier, ces documents ne délivrent pas d'enseignement concernant la gestion de la dissipation thermique, un enseignement qui serait utile pour pouvoir répondre au problème technique présenté ci-dessus.

Par ailleurs US 2016/183327 décrit un dispositif selon le préambule de la revendication 1 de chauffage d'un matériau composite comprenant deux coquilles, délimitant une chambre de réception pour le matériau composite. Un film peut être intercalé entre ce matériau et la coquille supérieure, laquelle est formée par plusieurs modules comprenant des LED (Light Emitting Diodes). Le chauffage du matériau composite, placé dans la chambre de réception, est assuré par l'intermédiaire des LED. Ce document fait uniquement allusion à une émission, un guidage, une distribution et une redirection de la lumière.

DE 20 2006 008399 décrit une matrice d'estampage, qui comprend un arbre et une couche de gaufrage. Cette dernière possède une surface active, destinée à coopérer avec un substrat à traiter. Dans un mode de réalisation, l'arbre et la couche de gaufrage sont réalisés au moins en partie en un matériau transparent, de manière à permettre la transmission de lumière selon la flèche pointillée. Ce document enseigne une simple transmission de l'énergie optique, via les parois de la tête de l'arbre.

US-A-2 312 232 divulgue un dispositif de production de lumière, intégrant un refroidissement par liquide. Ce dispositif comprend notamment une unité de lampe, formée par une lampe à mercure entourée par un tube réalisé en verre ou en quartz. Cette unité de lampe, fermée par deux embouts d'extrémité, est entourée par un fourreau permettant la circulation d'un liquide de refroidissement.

US 2005/284320 décrit un appareil permettant de laminer une structure, formée d'un substrat, d'un film magnétique et d'un film résistif. Cet appareil comprend tout d'abord deux plaques de presse et une source lumineuse, placée radialement à distance des plaques de presse et située à la même altitude que la structure à traiter.

US 2010/104682 décrit un dispositif d'impression, comprenant deux organes de pressage montés sur des plateaux respectifs. Des sources lumineuses sont placées directement dans les plateaux de presse précités.

Enfin on mentionnera FR-A-2 956 523, lequel décrit une batterie Li-ion entièrement solide, qui est une des applications préférées de l'invention.

Compte tenu de ce qui précède, un objectif de la présente invention est donc de remédier, au moins partiellement, aux inconvénients de l'art antérieur évoqués ci-dessus.

Un objectif principal de l'invention est d'apporter une solution constructive satisfaisante, afin de proposer un outil permettant de réaliser un objet par pressage à chaud, de façon à la fois particulièrement efficace et relativement simple.

Un autre objectif de l'invention est de proposer un outil de pressage à chaud dont la mise en oeuvre ne génère avantageusement pas une élévation de température substantielle, en dehors de la zone où s'exercent les forces de pressage.

Un autre objectif de l'invention est de proposer un tel outil qui s'accompagne d'une mise en oeuvre flexible, de façon à faire varier de façon commode les paramètres du procédé.

Un autre objectif de l'invention est de proposer une installation équipée d'un tel outil, laquelle est tout particulièrement adaptée à la fabrication d'un objet formé de plusieurs couches, en particulier à la fabrication d'une batterie Li-ion entièrement solide.

Un autre objectif de l'invention est de proposer une telle installation de fabrication, qui permet d'obtenir une cohésion efficace entre les différentes couches constitutives d'une telle batterie.


## Objet de l'invention

Selon l'invention, les objectifs ci-dessus sont atteints au moyen d'un outil de pressage à chaud selon la revendication 1 annexée.

D'autres caractéristiques avantageuses de l'outil conforme à l'invention font l'objet des revendications 2 à 18 annexées.

Les objectifs ci-dessus sont également atteints au moyen d'un procédé de mise en oeuvre de l'outil ci-dessus, selon la revendication 19 annexée.

D'autres caractéristiques avantageuses du procédé conforme à l'invention font l'objet des revendications 21 à 29 annexées.

Les objectifs ci-dessus sont également atteints au moyen d'une installation de fabrication d'objets selon la revendication 30 annexée.

Une caractéristique avantageuse de l'installation conforme à l'invention fait l'objet de la revendication 31 annexée.

Les objectifs ci-dessus sont également atteints au moyen d'un procédé de fabrication d'une batterie Li-ion entièrement solide, selon la revendication 32 annexée.

**Description des figures**

L'invention va être décrite ci-après, en référence aux dessins annexés, donnés uniquement à titre d'exemples non limitatifs, dans lesquels:

La figure 1 est une vue en coupe longitudinale, illustrant un outil de pressage conforme à un premier mode de réalisation de l'invention, dans une position où ses deux parties constitutives sont éloignées l'une de l'autre et sont montées sur des plateaux de presse respectifs.

La figure 2 est une vue en perspective, illustrant de manière éclatée les éléments constitutifs de la partie inférieure de l'outil de pressage représenté sur la figure 1.

La figure 3 est une vue en perspective, illustrant cette partie d'outil inférieure, une fois assemblée.

La figure 4 est une vue en perspective, illustrant de manière éclatée les éléments constitutifs de la partie supérieure de l'outil de pressage représenté sur la figure 1.

La figure 5 est une vue en perspective, illustrant l'outil de pressage dans sa position de la figure 1, les plateaux de presse n'étant pas représentés.

La figure 6 est une vue en perspective, illustrant plus particulièrement un anneau de support appartenant à l'outil de pressage conforme à l'invention.

La figure 7 est une vue de dessus, illustrant l'anneau de support montré à la figure 6.

La figure 8 est une vue en perspective illustrant un organe de chauffage appartenant à l'outil de pressage conforme à l'invention.

La figure 9 est une vue en coupe longitudinale, illustrant l'organe de chauffage montré à la figure 8.

La figure 10 est une vue en perspective illustrant une installation de fabrication d'objets comprenant notamment un outil de pressage conforme à l'invention, monté sur deux plateaux de presse.

La figure 11 est une vue de face, illustrant un empilement destiné à être traité avec l'outil de pressage de l'invention, cet empilement étant recouvert de plaques de protection.

La figure 12 est une vue en coupe longitudinale analogue à la figure 1, illustrant un outil de pressage conforme à un deuxième mode de réalisation de l'invention, dans une position où ses deux parties constitutives sont rapprochées l'une de l'autre.

La figure 13 est une vue en coupe longitudinale analogue à la figure 12, illustrant à bien plus grande échelle le trajet du rayonnement optique à l'intérieur de la chambre de pressage appartenant à l'outil de pressage de cette figure 12, dans une position où cet outil exerce une force de pressage sur l'empilement de la figure 11.

La figure 14 est une vue en perspective, illustrant par au-dessous la partie supérieure constitutive de l'outil de pressage de la figure 12.

Les figures 15 à 17 sont des vues schématiques, illustrant la mise en place des deux parties constitutives de l'outil de pressage des figures 12 à 14, sur des plateaux de presse respectifs.

Les références numériques suivantes sont utilisées dans la présente description:

| | |
|---|---|
| O1, O2 Outils de pressage | 2, 3 Parties de l'outil |
| 13 Rotule | 131 Sphère femelle |
| 132 Sphère mâle | 14 Plaque |
| 20, 30 Semelle | 21, 31 Pièce intercalaire |
| 22, 32 Canaux | 221, 321 Entrées de 22, 32 |
| 222, 322 Raccords | 23, 33 Bride |

(suite)

| | |
|---|---|
| 24 Gabarit | 25, 35 Socle |
| 26, 36 Disque réflecteur | 27, 27', 37, 37' Plaquettes |
| 28, 38 Bloc concentrateur | 281, 282, 283 Faces de 28 |
| A283 Angle par rapport à la verticale | H28 Hauteur de 28 |
| 29 Collier | 291 Orifices |
| 292, 293 Encoches | 294 Taquet |
| 295 Organe de verrouillage | 296 Tige |
| 4 Anneau | 41, 42 Faces frontales |
| 43, 44 Faces radiales | 4' Moyens de fixation |
| 2E / 42E Epaulements | 41', 42' Gorges |
| 41", 42" Joints | 45 Logements |
| P45 Plan de 45 | 46, 46' Parois |
| 47 Fenêtre d'émission | 48 Echancrures |
| 48' Volets | 48" Orifices taraudés |
| 49 Embouts | 60, 70 Semelle |
| 5 Organe de chauffage | 51 Lampes |
| 52 Fourreau | 53, 54 Culots |
| 55, 56 Eléments de connexion électrique | 55', 56' Pions |
| 57 Doigt de centrage | 58, 59 Espaces annulaires |
| 10, 12 Plateaux de presse | 11 Flasque de presse |
| 102 Support | 104 Bâti |
| 106 Ensemble de commande | 108 Unité de production de froid |
| 110 Unité de mise sous vide | 111 Unité d'alimentation en gaz |
| 112 Unité de manipulation | 114 Bras mobile |
| F12, F'12 Flèches | E Espace intercalaire |
| 200 Empilement | 201 Couche d'anode |
| 202 Couche de cathode | 203 Couche d'électrolyte solide |
| 204, 205 Plaques | E204, E205 Epaisseur de 204, 205 |
| 204', 205' Rebords | L204', L205' Largeur de 204', 205' |
| R1 - R6 Trajet du rayonnement | R6a, R6b Fraction extérieure rayonnement |
| 26H, 26B, 36H, 36B Butées de 26, 36 | F26, F36, F70 Débattements de 26, 36, 70 |

## Description détaillée

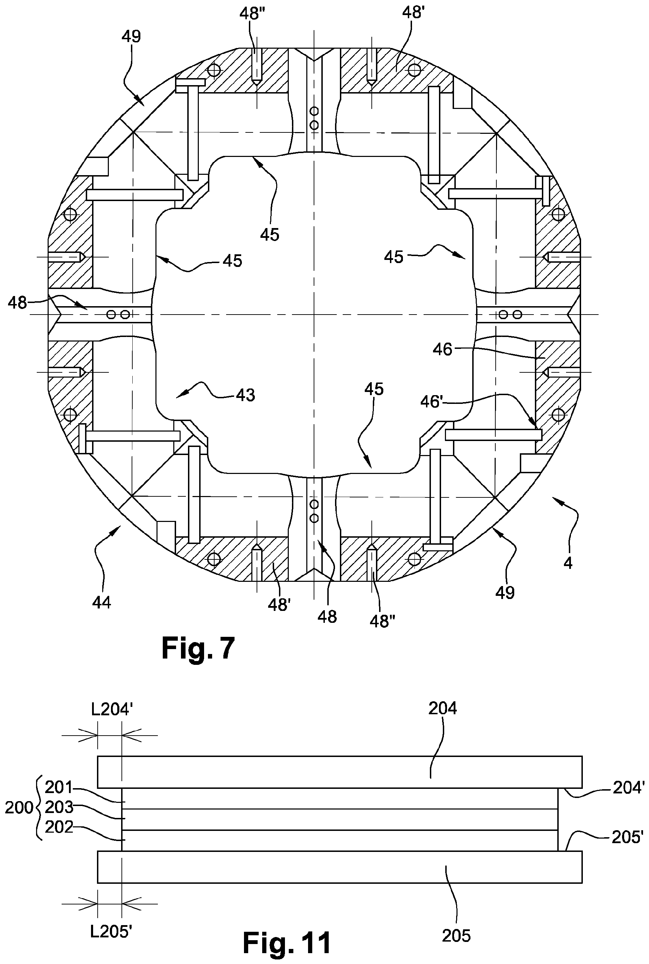

Les figures annexées décrivent deux modes de réalisation d'un outil de pressage à chaud, conforme à l'invention. Dans les exemples illustrés ces outils sont utilisés pour le traitement d'empilements, ou assemblages, décrits plus en détail en référence à la figure 11. Comme on le verra dans ce qui suit, ces empilements sont destinés à former des batteries Li-ion entièrement solides. Comme cela a été explicité ci-dessus, ces batteries peuvent être notamment assemblées à haute température et haute pression, par frittage ou soudure par diffusion, ou encore à plus basse température et plus basse pression, par collage ou polymérisation.

Néanmoins, on peut prévoir d'autres utilisations à l'outil de pressage conforme à l'invention, en particulier la fabrication de tout type d'objets faisant intervenir un assemblage par frittage, une soudure par diffusion, une polymérisation ou encore un collage, entre au moins certains composants de cet objet. De façon plus générale, l'outil de pressage conforme à l'invention est bien adapté pour réaliser des assemblages, tels que ceux réalisés au moyen des solutions de l'art antérieur présentées en préambule de la présente description.

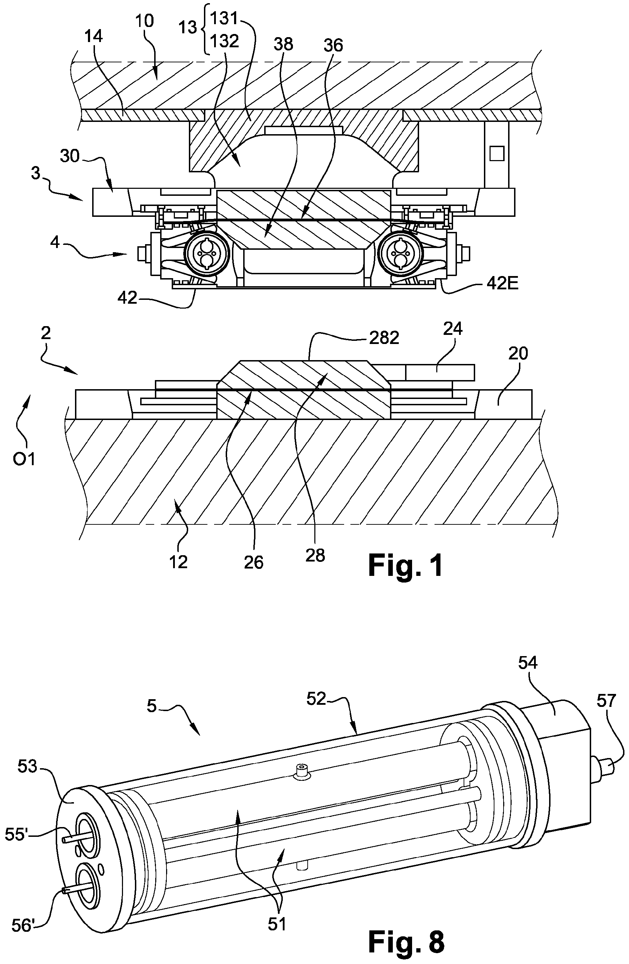

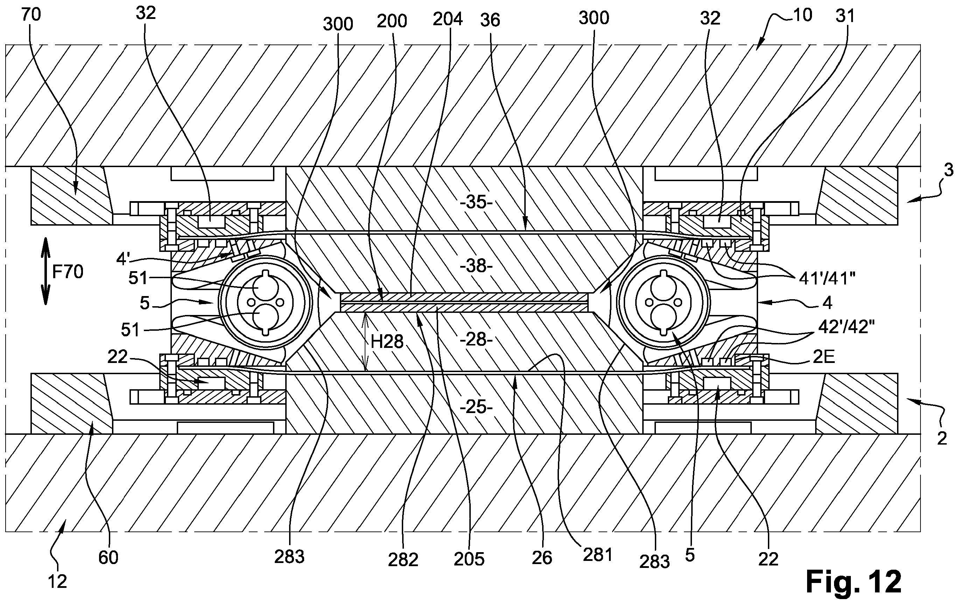

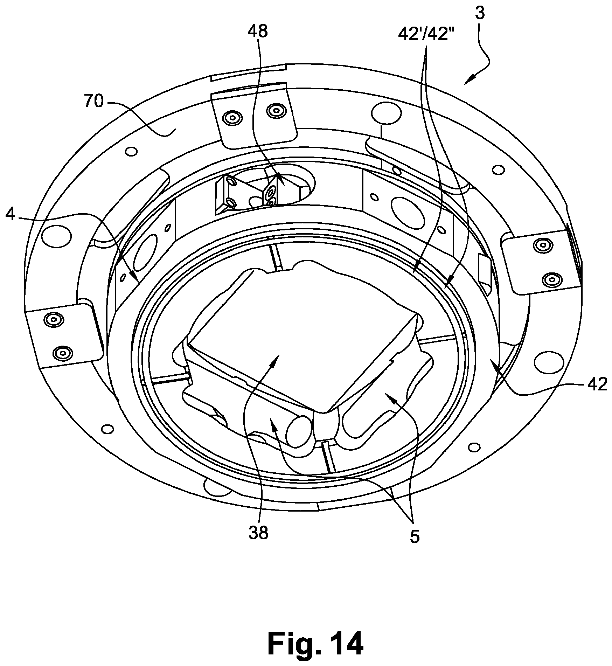

Les figures 1 à 10 illustrent un outil de pressage selon une première variante de l'invention, lequel est désigné dans son ensemble par la référence 01. Cet outil O1 est destiné à être monté sur une presse, grâce à des moyens de fixation amovible de nature mécanique, lesquels seront décrits de manière détaillée dans ce qui suit. Les figures 12 à 14 illustrent un outil de pressage selon une deuxième variante de l'invention, lequel est désigné dans son ensemble par la référence 02. Comme on va le voir dans ce qui suit, cet outil 02 diffère essentiellement de celui 01 décrit ci-dessus, en ce qu'il est destiné à être monté sur la presse grâce à des moyens de fixation amovible de nature magnétique.

Sur ces figures 12 à 14, les éléments mécaniques de l'outil 02, identiques à ceux de l'outil 01, y sont affectés des mêmes numéros de référence. Pour décrire ces éléments mécaniques, communs aux deux modes de réalisation, on fera indifféremment référence, soit aux figures 1 à 10, soit aux figures 12 à 14. En revanche les éléments mécaniques de l'outil 02, qui sont différents de ceux de l'outil O1 par leur structure et/ou leur fonction, sont affectés de numéros de référence différents.

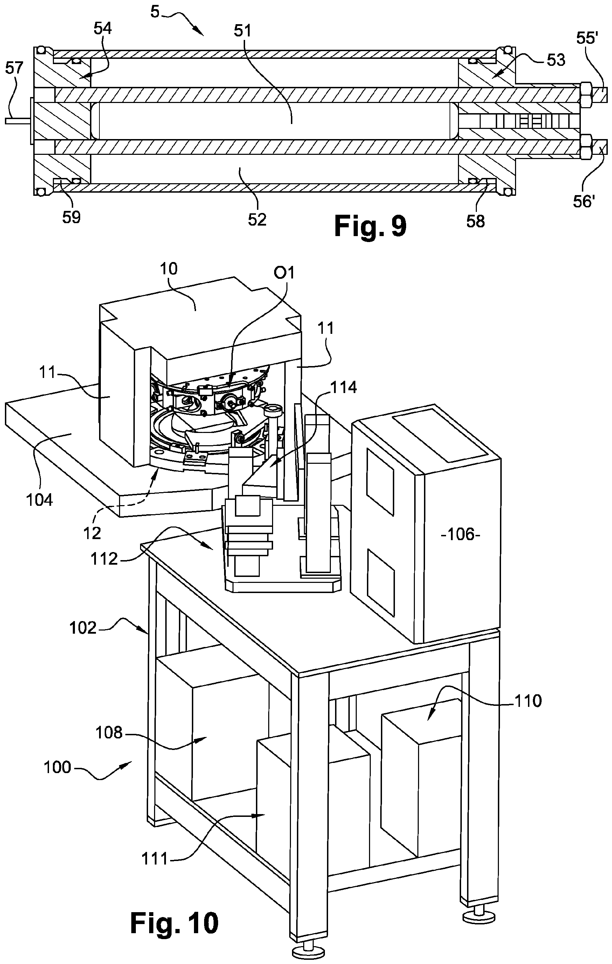

La presse est visible sur la figure 10, tout en étant illustrée à plus grande échelle, de façon partielle, sur la figure 1. De manière connue en soi, cette presse comprend un plateau supérieur fixe 10, reposant sur des flasques 11 s'étendant à partir d'un support 104, appartenant à un bâti 102. Le support et le bâti sont visibles sur la figure 10, laquelle montre d'autres éléments mécaniques qui seront décrits plus en détail dans ce qui suit. La presse comprend en outre un plateau inférieur 12, plus particulièrement visible sur la figure 1.

Ce plateau inférieur 12 est mobile par rapport au plateau supérieur 10 selon une direction dite de pressage, laquelle est perpendiculaire au plan principal de chaque plateau, en l'occurrence verticale dans l'exemple illustré. Le déplacement de ce plateau inférieur, lequel coulisse au travers d'une ouverture non représentée, ménagée dans le support précité 104, est mis en oeuvre par tout moyen approprié, par exemple des vérins non représentés. A titre de variantes non illustrées, on peut prévoir un plateau supérieur mobile par rapport à un plateau inférieur fixe, ou encore deux plateaux mobiles par rapport au support.

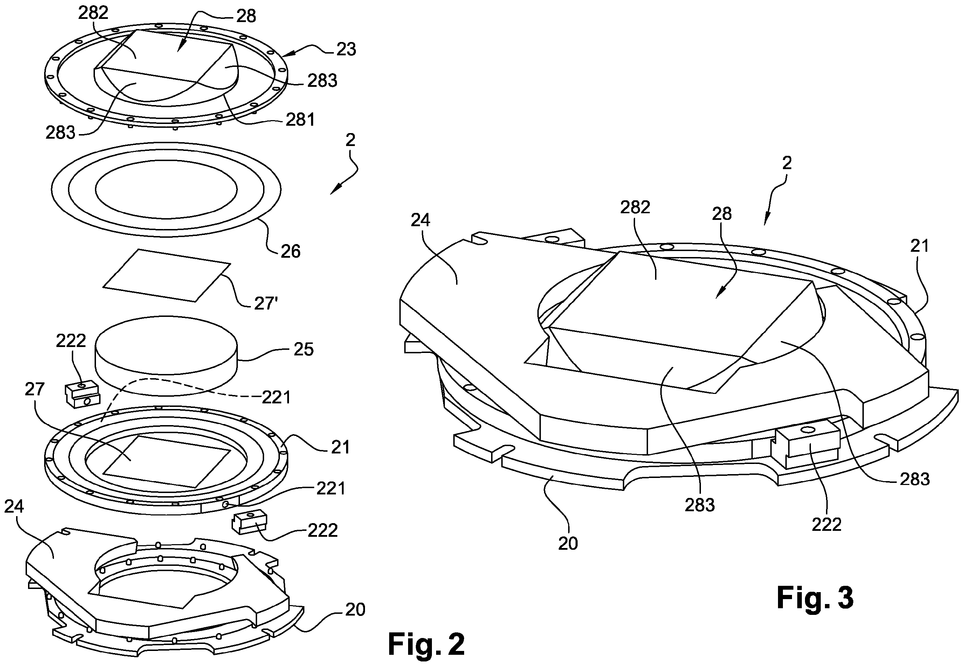

En référence à la figure 1, l'outil de pressage à chaud O1 comprend deux parties d'outil 2 et 3, dont chacune est montée sur un plateau de presse respectif. Comme le montrent les figures 2 et 3, la partie d'outil 2 comprend une semelle 20, fixée à une pièce intercalaire 21 par tout moyen approprié, notamment par vissage, avec interposition de joints d'étanchéité non représenté sur ces figures. La face inférieure de la pièce intercalaire 21 est creusée de canaux 22 de circulation d'un fluide caloporteur (voir figure 12), à partir d'une unité distante visible sur la figure 10 et qui sera décrite ci-après. Les entrées 221 de ces canaux sont visibles sur cette figure 2, tout comme les raccords 222 assurant la connexion avec la source de fluide précitée. La pièce intercalaire 21 est fixée, notamment par vissage, à une bride 23 également de forme annulaire, laquelle supporte un gabarit 24 de centrage et de positionnement.

L'espace central des éléments ci-dessus 20, 21, 23 et 24 est occupé tout d'abord par un socle 25 de forme cylindrique, lequel forme organe de transmission d'efforts, lors de l'opération de pressage. Ce socle 25 supporte un disque 26, dont la périphérie est maintenue en position par la bride 23 précitée. Ce disque 26 constitue un organe optique dit intermédiaire, à savoir qu'il est intercalé sur le trajet du rayonnement entre les organes de chauffage optique et le siège de réception de l'objet à presser. Ce disque 26 forme un réflecteur, c'est-à-dire qu'il est adapté pour réfléchir sensiblement l'intégralité du rayonnement optique qu'il reçoit. A cet effet, il est réalisé typiquement en aluminium. De plus sa surface en contact avec le rayonnement optique, c'est-à-dire sa surface supérieure dans l'exemple illustré, est polie.

De façon avantageuse, une plaquette 27 est fixée, par tout moyen approprié, sur la face inférieure du socle 25. Cette plaquette 27, par exemple réalisée en cuivre, est munie d'une sonde de température non représentée, de tout type approprié. Par ailleurs il est prévu une plaquette supplémentaire 27', analogue à celle 27 ci-dessus, dont la fonction est d'assurer une protection mécanique vis-à-vis du disque 26, notamment lors de l'opération de pressage.

Enfin un bloc 28, dont la forme va être décrite plus en détail dans ce qui suit, repose sur le disque 26. Ce bloc 28 constitue un autre organe optique intermédiaire, à savoir qu'il est intercalé sur le trajet du rayonnement entre les organes de chauffage et le siège de réception, tout comme le disque 26. Ce bloc 28 forme un concentrateur, c'est-à-dire qu'il est adapté pour concentrer le rayonnement optique provenant des organes de chauffage, puis le diriger vers le disque réflecteur précité 26. A cet effet, ce concentrateur 28 est réalisé typiquement en silice.

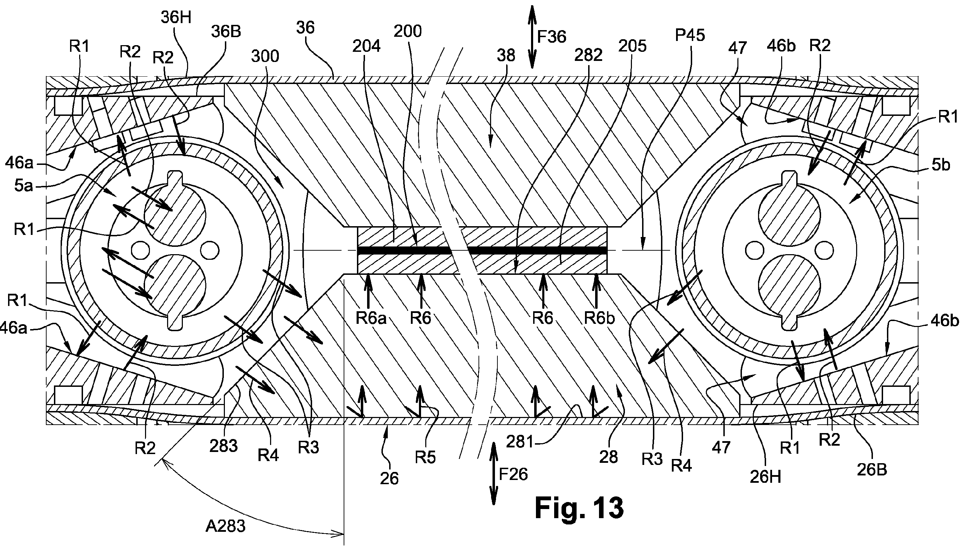

Comme le montrent notamment les figures 2, 3, 12 et 13, le concentrateur 28 comprend une face inférieure 281, prenant appui contre le réflecteur 26, et une face supérieure 282 formant siège pour l'empilement à traiter conformément à l'invention. Vues de dessus, sa face inférieure est circulaire alors que sa face supérieure est de forme sensiblement carrée. Ces deux faces 281 et 282 sont reliées par des faces latérales planes 283, lesquelles sont inclinées par rapport à la verticale. De façon avantageuse, chaque face latérale 283 forme avec cette verticale un angle A283, visible sur la figure 13, qui est compris entre 30 et 60°, notamment voisin de 45°.

Etant donné que la face supérieure 282 du concentrateur présente quatre côtés, elle se raccorde à la face inférieure 281 par quatre faces latérales 283. A titre de variante, on peut cependant prévoir une face supérieure polygonale de forme différente, notamment hexagonale, auquel cas il est prévu six faces latérales. On préfère cependant une forme carrée associée à quatre faces latérales, ce qui permet de conférer un caractère symétrique accompagné d'une structure relativement simple.

Les dimensions de la face 282 sont choisies de manière à être légèrement supérieures à celles de l'empilement traité. La hauteur H28 du concentrateur (voir figure 12) est avantageusement comprise entre 15 et 45 millimètres. De façon induite, les dimensions de la face inférieure 281 dépendent de celles de la face 282, ainsi que de la hauteur H28 et de l'angle A283. Les dimensions radiales du réflecteur 26 sont choisies de manière à être nettement supérieures à celles de la face en regard du concentrateur.

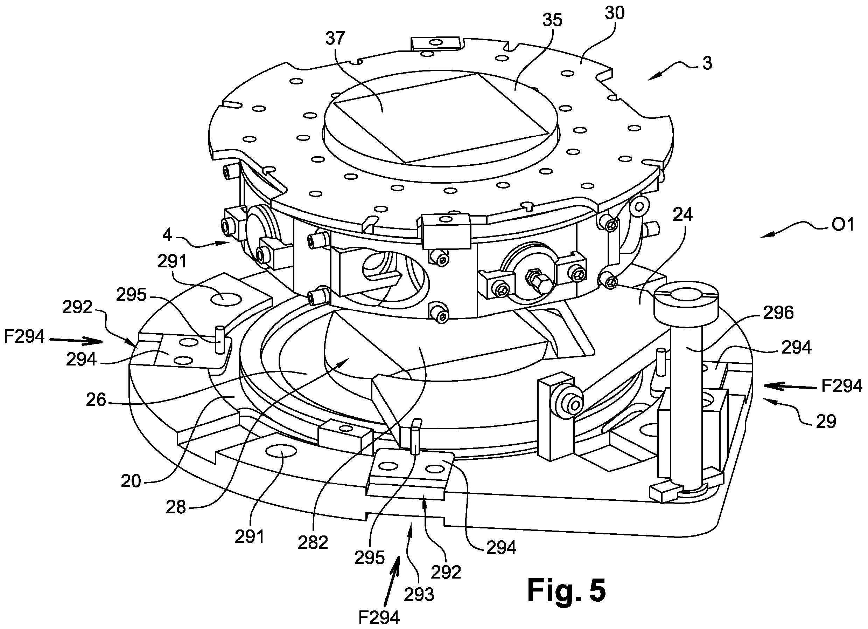

La partie d'outil 2 est fixée sur le plateau inférieur 12, de façon amovible, au moyen d'un collier 29 visible notamment sur la figure 5. Ce collier 29 est tout d'abord percé d'orifices axiaux 291, permettant le passage de moyens non représentés, tels des vis, permettant de solidariser le collier sur le plateau inférieur 12. Le collier 29 est en outre creusé d'encoches radiales 292 et 293, sur ses faces frontales opposées. Chaque encoche reçoit un taquet mobile 294, étant entendu que tous les taquets ne sont pas illustrés sur cette figure 5. A son extrémité radialement intérieure, chaque taquet supérieur 294 est équipé d'un organe de verrouillage 295, propre à coopérer avec le taquet inférieur en regard.

Enfin le collier 29 est muni d'une tige 296, destinée au montage d'un bras de manipulation qui sera décrit plus en détail dans ce qui suit.

En vue de la fixation de la partie d'outil 2 sur le plateau 12, on solidarise tout d'abord le collier 29 sur ce plateau, en plaçant les taquets 294 radialement vers l'extérieur. De la sorte, la partie d'outil 2 peut être librement introduite à l'intérieur de ce collier, dans la position définitive qu'elle doit adopter. Ensuite, on déplace les taquets radialement vers l'intérieur, selon les flèches F294, puis on actionne les organes de verrouillage 295. Chaque paire de taquets permet alors d'immobiliser la semelle 20 et, par conséquent, l'ensemble de la partie d'outil 2, par rapport au collier 29 et, par conséquent, par rapport au plateau 12.

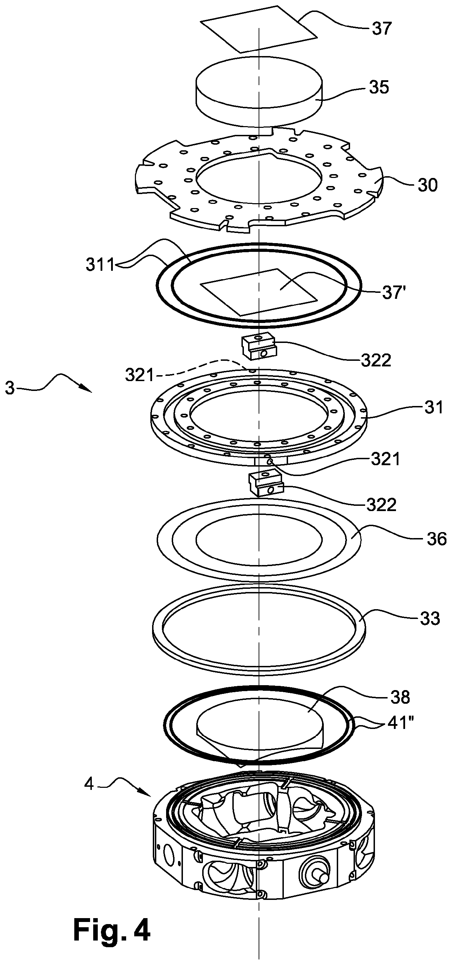

Comme le montrent notamment les figures 4 et 12, la partie d'outil supérieure 3 comprend tout d'abord une semelle 30. De façon connue en soi cette semelle est fixée de manière amovible sur le plateau de presse 10, avec interposition d'une articulation à rotule 13. Cette dernière comprend tout d'abord une sphère femelle 131, solidarisée au plateau 10 par l'intermédiaire d'une plaque intermédiaire 14 vissée dans ce plateau. Par ailleurs, la semelle 30 est fixée sur une sphère mâle 132, coopérant avec la sphère femelle 131 précitée. La présence de cette articulation à rotule 13 assure, de manière classique, un alignement satisfaisant entre les deux parties d'outil 2 et 3, en service.

La semelle 30 est fixée à une pièce intercalaire 31 par tout moyen approprié, notamment par vissage, avec interposition de joints d'étanchéité 311. La face inférieure de la pièce intercalaire 31 est creusée de canaux 32 de circulation d'un fluide caloporteur, à partir de l'unité distante précitée. Les entrées 321 de ces canaux sont visibles sur cette figure 4, tout comme les raccords 322 assurant la connexion avec cette source de fluide. La pièce intercalaire 31 est fixée, notamment par vissage, à une bride 33 également de forme annulaire.

L'espace central des éléments annulaires ci-dessus 30, 31 et 33 est occupé tout d'abord par un socle 35, de forme cylindrique, lequel supporte un disque réflecteur 36, dont la périphérie est maintenue en position par la bride 33 précitée. De façon avantageuse, une plaquette 37 munie de sondes de température est interposée entre le socle 35 et l'embase du boîtier. Par ailleurs il est prévu une plaquette supplémentaire 37', analogue à celle 37 ci-dessus, dont la fonction est d'assurer une protection mécanique vis-à-vis du disque 36, notamment lors de l'opération de pressage. Enfin, un concentrateur 38 repose sur le réflecteur 36. Les organes mécaniques 35, 36 et 38 sont identiques dans leur fonction, leur nature et leurs dimensions, respectivement à ceux 25, 26 et 28 décrits ci-dessus. Cela permet de conférer une symétrie de l'outil, par rapport à un plan horizontal médian, ce qui est avantageux en termes de qualité de pressage et de concentration du rayonnement optique.

La partie d'outil supérieure 3 est en outre équipée d'un anneau 4, présentant plusieurs fonctions. Comme on le verra ci-dessous, cet anneau forme tout d'abord la paroi latérale périphérique de la chambre de pressage, en service. Par ailleurs, il assure le support d'organes de chauffage 5, dont la structure est décrite ci-après.

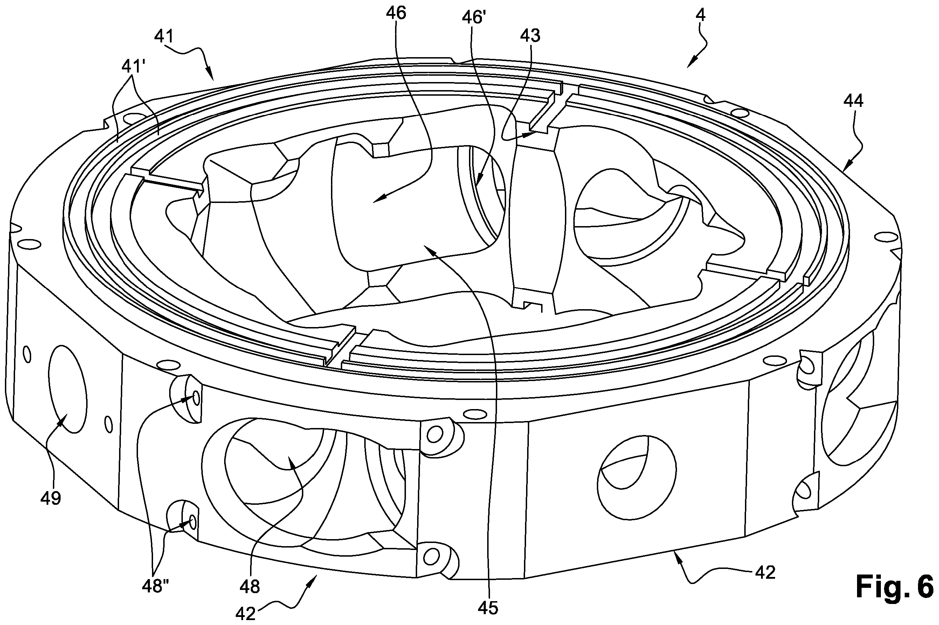

Cet anneau 4, plus particulièrement représenté en figures 6 et 7, est réalisé par exemple en aluminium. Il présente deux faces frontales opposées 41 et 42, ainsi que deux faces radiales opposées, respectivement interne 43 et externe 44. Comme le montre la figure 12, la face frontale supérieure 41 de cet anneau est fixée de manière amovible sur la pièce intercalaire 31 par des moyens de fixation 4', de tout type approprié. La face frontale inférieure 42 de l'anneau 4 est distante de la partie d'outil inférieure 2 dans la position de la figure 1 alors que, dans la position de la figure 13, cette face frontale 42 prend appui contre cette partie d'outil inférieure 2.

Comme le montre notamment la figure 1, la face frontale libre 42 de l'anneau 4 délimite un épaulement 42E, destiné à coopérer avec un épaulement complémentaire 2E, visible en figure 12, lequel est formé sur la partie d'outil 2. Ces deux épaulements permettent de positionner mutuellement cet anneau et cette partie d'outil, selon une direction transversale par rapport à la direction de pressage, en l'occurrence horizontale.

Au moins une gorge 41' et 42' circulaire, destinée à la réception d'un joint torique d'étanchéité 41" et 42", est ménagée dans chacune des faces 41 et 42. On préfère utiliser, pour chaque face frontale, deux gorges concentriques mutuellement adjacentes. Une fois que les organes mécaniques constitutifs de la partie d'outil supérieure 3 sont mutuellement assemblés, les joints 41" sont écrasés entre la première face 41 et la bride 33. Par ailleurs, dans la position active de l'outil, les joints 42" sont écrasés entre la face opposée 42 et la paroi en regard de la partie d'outil inférieure 2.

L'anneau de support 4 est creusé de plusieurs logements 45, dont chacun est adapté à la réception d'un organe de chauffage respectif 5, par rayonnement optique. On prévoit un nombre de logements 45, qui est égal au nombre de faces latérales du réflecteur. En vue de dessus, chaque logement s'étend de façon sensiblement parallèle à un côté respectif de la face supérieure du concentrateur 28.

On va maintenant faire référence aux figures 8 et 9, lesquelles illustrent l'un 5 des organes de chauffage équipant l'outil de l'invention, étant entendu que ces différents organes sont avantageusement identiques. Dans le mode de réalisation illustré chaque organe de chauffage 5 comprend deux lampes à quartz 51, de type connu en soi, qui sont entourées par un fourreau périphérique 52, également réalisé en quartz. De façon avantageuse, ces lampes présentent une puissance réglable. A ses deux extrémités longitudinales, le fourreau 52 est solidaire de deux culots de longueurs différentes, à savoir un culot dit court 53 et un culot dit long 54.

L'organe de chauffage 5 comprend en outre des éléments de connexion électrique respectifs 55 et 56, qui font saillie hors du culot 53, par des pions d'extrémité 55' et 56'. Ces pions sont reliés à une alimentation de type connu en soi, avantageusement intégrée à l'ensemble de commande 106 de la figure 10, de manière à assurer l'alimentation électrique des lampes 51. Par ailleurs un doigt de centrage 57 fait saillie hors du culot 54, de façon à permettre le positionnement de l'organe de chauffage 5 contre les parois de son logement. De façon avantageuse, chaque culot 53 et 54 forme, avec les parois en regard du fourreau 52, un espace périphérique annulaire 58 et 59. Ce dernier est mis en communication avec une source de fluide caloporteur, notamment celle coopérant avec les canaux 22 et 32 ci-dessus. Cela permet de préserver l'intégrité mécanique de ces culots 53 et 54, en évitant qu'ils ne soient portés à une trop haute température en service.

En référence à nouveau aux figures 6 et 7, chaque logement 45 est bordé par une paroi principale 46, de section transversale cylindrique. Le diamètre intérieur de ce logement est très légèrement supérieur au diamètre extérieur du corps de chaque lampe, de manière à créer une fixation par coincement, ou ajustement serré, de chaque lampe au sein de son logement respectif. Comme le montre la figure 12, la paroi 46 délimite une fenêtre 47, dite d'émission, qui est orientée vers le centre de l'anneau. Sur cette figure 12, on a également illustré le plan P45, horizontal dans le présent mode de réalisation, qui est parallèle au plan principal de chaque partie d'outil, tout en passant par le centre du logement 45. La fenêtre d'émission 47 s'étend avantageusement de manière symétrique, par rapport à ce plan P45.

Le fourreau 52 de la lampe 5 s'étend, en service, contre la paroi principale 46, alors que son culot long 54 s'étend contre une paroi secondaire 46' (voir figure 6), prolongeant axialement la paroi 46 précitée. De façon préférée, ces parois 46 et 46' présentent des revêtements de surface différents. Ainsi, la paroi principale 46 est avantageusement apte à renvoyer le rayonnement optique émis par chaque lampe 5, alors que la paroi secondaire est avantageusement apte à absorber ce rayonnement. A cet effet, la paroi principale est par exemple recouverte d'une peinture dorée, alors que la paroi secondaire est par exemple recouverte d'une peinture sombre.

Chaque logement 45 est mis en communication avec la face externe 44 de l'anneau, via une échancrure 48 ménagée dans le corps de cet anneau. Cela permet la mise en place, par un opérateur, de chaque lampe au sein de son logement respectif. Chaque échancrure est avantageusement obturée par un volet respectif 48', visible en figure 7, qui est fixé de manière amovible contre la face externe 44. A cet effet, on peut prévoir des vis non représentées, qui pénètrent dans des orifices taraudés 48" ménagés dans cette face externe. Enfin l'anneau est équipé d'embouts 49, alimentés par des tubulures non représentées. Ces dernières peuvent être mises en communication avec une source de mise en dépression décrite ci-après, ou encore avec une source de gaz neutre.

Dans ce qui suit on va à nouveau faire référence à la figure 10, laquelle représente une installation de fabrication d'objets, équipée de l'outil de pressage 01 conforme à l'invention. Cette installation, désignée dans son ensemble par la référence 100, comprend tout d'abord le bâti 102 et le support 104, tous deux décrits ci-dessus. Cette installation est en outre munie de différents équipements périphériques, permettant la mise en oeuvre de l'outil O1. Ces équipements sont de type connu en soi, de sorte qu'ils ne seront pas décrits en détail dans ce qui suit. La figure 10 montre :

- un ensemble 106 de contrôle/commande, comprenant notamment des moyens assurant l'alimentation électrique des lampes ;
- une unité de production de froid 108, représentée de façon schématique, laquelle est équipée entre autres de tubulures non représentées propres à alimenter les canaux de refroidissement 22, 32 ménagés dans les plateaux de presse, ainsi que les espaces annulaires 58, 59 des organes de chauffage 5 ;
- une unité de mise sous vide 110, formant source de dépression, qui est illustrée également de façon schématique. Cette unité 110 est équipée entre autres de tubulures non représentées propres à alimenter les embouts 49 dont est pourvu l'anneau de support ;
- une unité 111 d'alimentation en un gaz ou un mélange de gaz. Cette unité, illustrée de façon schématique, est équipée de tubulures non illustrées propres à alimenter les embouts 49 précités ;
- une unité de manipulation 112, comprenant un bras mobile 114. Cette unité assure la mise en place des objets à traiter sur le siège de pressage 282, formé par la surface supérieure du réflecteur. Cette unité est avantageusement munie de moyens de centrage non représentés, tels des pions pénétrant dans des orifices ménagés dans l'objet à positionner.

Comme indiqué ci-dessus l'outil 02, conforme à un deuxième mode de réalisation de l'invention, est monté sur la presse grâce à des moyens de fixation amovible de nature magnétique. A cet effet, comme le montre notamment la figure 12, chaque semelle 60 et 70 est adaptée pour une fixation magnétique sur un plateau de presse respectif 10 et 12. Chaque semelle est par exemple réalisée en matériau magnétique, coopérant avec le matériau magnétique du plateau adjacent. A titre de variante, cette semelle peut être réalisée en un matériau non magnétique, auquel cas elle est équipée d'un ou plusieurs aimants de fixation sur le plateau adjacent.

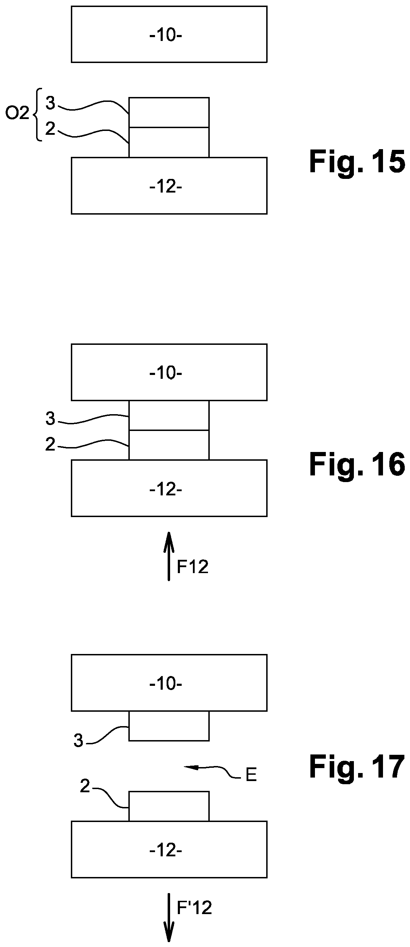

La mise en oeuvre de l'outil de pressage O1 ou O2, ainsi que de l'installation de fabrication 100, tels que décrits ci-dessus, va maintenant être explicitée dans ce qui suit. Il s'agit tout d'abord de fixer chaque partie d'outil 2, 3 sur un plateau de presse respectif. Comme on l'a vu ci-dessus, dans le cas de l'outil O1, cette fixation est réalisée par vissage, selon un positionnement prédéterminé. La mise en place de l'outil O2, qui est différente de celle de l'outil O1, est décrite en référence aux figures 15 à 17. Sur ces figures, on a représenté de façon schématique les deux parties d'outil 2 et 3, ainsi que les deux plateaux de presse 10 et 12.

On superpose tout d'abord l'une sur l'autre les deux parties d'outil 2 et 3, par simple gravité. On notera que, dans cette configuration, l'outil complet 02 peut être aisément manipulé. Puis on place cet outil sur le plateau inférieur 12 de la presse, le plateau supérieur 10 étant distant de ce dernier (voir figure 15). La partie inférieure d'outil est alors solidarisée au plateau inférieur 10, de façon magnétique.

On rapproche ensuite les deux plateaux de presse, selon la flèche F12, jusqu'à ce que la partie d'outil supérieure 3 et le plateau de presse supérieur 10 viennent en contact mutuel (voir figure 16). Dans cette configuration, cette partie supérieure 3 est alors solidarisée à ce plateau 10, de manière magnétique. En revanche, aucune force de pressage significative n'est exercée sur l'outil.

Ensuite, on écarte mutuellement les deux plateaux de presse, selon la flèche F'12. Etant donné que les deux parties d'outils sont fixées sur un plateau de presse respectif, elles s'éloignent alors mutuellement (voir figure 17). Ces deux parties de l'outil 02 sont alors dans une configuration analogue à celle décrite en référence à la figure 1, en ce qui concerne l'outil O1. On met ensuite en place un objet à presser sur le siège 282, qui est aisément accessible étant donné la formation d'un espace intercalaire E entre les deux parties d'outil mutuellement éloignées.

Selon une variante avantageuse non représentée, on peut empiler plusieurs outils et disposer cette superposition d'outils analogues entre les deux plateaux d'une même presse. Cette variante est tout particulièrement adaptée à des parties d'outil magnétiques, car les parties adjacentes, appartenant à deux outils différents, peuvent être aisément fixées et positionnées mutuellement.

Dans le présent exemple de réalisation, on réalise une opération de pressage sur un empilement de couches destinées à former une batterie Li-ion entièrement solide, comme vu ci-dessus. Sur la figure 11 cet empilement, désigné dans son ensemble par la référence 200, comprend une unique cellule élémentaire composée de trois couches, à savoir une couche d'anode 201, une couche de cathode 202, ainsi qu'une couche intermédiaire 203 d'électrolyte solide. A titre de variante, on peut prévoir que cet empilement est formé par un assemblage de plusieurs cellules élémentaires telles que ci-dessus, lesquelles sont disposées les unes au-dessus des autres et sont connectées en parallèle, de manière connue en soi. Chaque cellule comporte en outre des moyens de connexion, notamment de type électrique, qui sont de type classique et ne sont pas illustrés sur la figure 11.

De manière préférée, on place une plaque respectivement 204 et 205 contre chaque couche d'extrémité 201 et 202. Ces plaques, qui sont visibles également sur les figures 12 et 13, sont tout d'abord destinées à assurer une fonction de protection mécanique vis-à-vis des concentrateurs 28 et 38, de façon à limiter les contraintes exercées sur ces derniers lors de l'étape de pressage. De plus, ces plaques 204 et 205 permettent d'éviter que d'éventuelles poussières, présentes sur ces couches, n'interfèrent sur le trajet du rayonnement optique émis par les lampes. Ce dernier point sera décrit plus en détail dans ce qui suit, en référence à la figure 13.

Chaque plaque est avantageusement réalisée en un matériau présentant des caractéristiques mécaniques adaptées pour les fonctions ci-dessus, par exemple du carbone ou un acier de type DILVER ® P1. De manière préférée, cette plaque possède un revêtement absorbant l'énergie de rayonnement des lampes, par exemple un revêtement de couleur sombre. A titre d'exemple, l'épaisseur E204 ou E205 de chaque plaque est typiquement voisine de 5 millimètres. Les deux autres dimensions de chaque plaque 204 ou 205, selon son plan principal, sont voisines de celles de la couche 201 ou 202 qu'elle recouvre.

De façon avantageuse, on choisira de réaliser une plaque légèrement plus grande que la couche qui lui est adjacente. Cette plaque présente ainsi un rebord périphérique 204' ou 205', dont la dimension L204' ou L205' est par exemple voisine de quelques millimètres. La présence de ce rebord permet d'assurer que chaque couche 201 ou 202 est toujours recouverte par sa plaque de protection 204 ou 205, notamment lors de l'étape de mise en place sur le siège 282 de l'outil O1 ou 02, ou encore lors de l'étape de pressage proprement dite. On notera que, sur la figure 11, les échelles respectives des différents éléments mécaniques ne sont pas respectées, dans un but de meilleure lisibilité du dessin.

On place ensuite, grâce au bras de manipulation, l'empilement 200 décrit ci-dessus, ainsi que ses deux plaques de protection 204 et 205. Ces dernières sont positionnées puis maintenues en position, grâce au gabarit 24. On actionne ensuite les vérins, de manière à déplacer le plateau de presse mobile en direction du plateau de presse fixe, ce qui provoque le rapprochement des deux parties d'outil. Au terme de ce déplacement, la face frontale 42 de l'anneau 4 vient en butée contre la partie inférieure 2 de l'outil, ce qui provoque l'écrasement des joints toriques 42''.

Cette configuration rapprochée des parties d'outil, illustrée sur la figure 12 et à plus grande échelle sur la figure 13, permet de délimiter une chambre de pressage, désignée par la référence 300 sur ces figures. Il existe ensuite quatre variantes de réalisation de l'invention, en ce qui concerne une éventuelle mise sous atmosphère contrôlée du volume intérieur de la chambre de pressage 300.

Dans une première variante, on relie les embouts 49 à la source de dépression 110, de manière à créer un vide partiel à l'intérieur de la chambre 300. A titre d'exemple non limitatif, on place cette chambre à une pression voisine de $10^{-3}$ mbar. Dans une deuxième variante, on relie les embouts 49 et la source 111 de gaz neutre, de manière à inerter le volume intérieur de la chambre de pressage. Ces deux premières variantes permettent d'éviter la mise en contact des éléments constitutifs de l'empilement avec l'air ambiant. Cela est tout particulièrement avantageux dans le cas où ces éléments possèdent un composant, tel que le lithium, dont l'oxydation doit être évitée.

Selon une troisième variante, la source 111 alimente un gaz non neutre dans le volume intérieur de la chambre de pressage 300.

Selon une quatrième variante, la chambre de pressage est confinée mais n'est pas mise sous vide, ni soumise à un balayage de gaz. En d'autres termes, aucune étanchéité particulière n'est mise en oeuvre, ce qui est avantageux en termes de simplicité. Cette variante trouve son application dans le cas où l'article à presser conformément à l'invention, ne possède pas de composant susceptible de s'altérer sous l'effet de l'oxydation.

Ensuite, on active les lampes des organes de chauffage 5, de manière à augmenter la température à l'intérieur de la chambre 300. Dans le cas de l'empilement 200, on a vu qu'il peut faire l'objet, soit d'un traitement à haute température et haute pression, soit d'un traitement à plus basse température et plus basse pression. Dans le premier cas on place la chambre à une température cible, dite de pressage, comprise typiquement entre 400 et 700°C alors que, dans le second cas, on place la chambre à une température cible comprise typiquement entre 100 et 200°C.

De façon avantageuse, on augmente la température de façon continue, selon une vitesse par exemple voisine de 100°C par minute. Dans ces conditions la durée de cette phase de montée en température, qui dépend du type d'assemblage visé, par frittage ou collage, est typiquement de quelques minutes. En fonction de la valeur de la température cible, on règle la puissance de chaque lampe 51. Dans le cas où cette température seuil est peu élevée, typiquement lors d'un assemblage par collage ou polymérisation, on peut aussi prévoir d'utiliser uniquement une partie des lampes précitées.

La figure 13 illustre le trajet du rayonnement optique, émis par les lampes 51 en direction de l'empilement 200 à traiter. Sur cette figure 13, on a uniquement représenté, pour davantage de clarté :

- l'empilement 200 et ses plaques de protection 204, 205,
- deux organes de chauffage 5a et 5b prévus sur les côtés opposés de cet empilement,
- les parois 46a et 46b des logements de réception des lampes,
- les deux réflecteurs 26 et 36, ainsi que les deux concentrateurs 28 et 38.

Sur cette figure 13 l'empilement 200, ainsi que les organes optiques intermédiaires 26, 28, 36 et 38 sont illustrés de façon partielle selon leur dimension transversale, afin d'améliorer la lisibilité du trajet du rayonnement. Par ailleurs, de manière à alléger l'ensemble du dessin, on a illustré uniquement le trajet du rayonnement optique vers le bas, à savoir vers le concentrateur inférieur 28, le réflecteur inférieur 26 et la face inférieure de l'empilement 200. On gardera à l'esprit que le trajet du rayonnement optique vers le haut, à savoir vers le concentrateur supérieur 38, le réflecteur supérieur 36 et la face supérieure de l'empilement, est sensiblement symétrique du trajet du rayonnement optique vers le bas, par rapport au plan médian P45.

Une fois activées, les lampes 51a, 51b des organes de chauffage 5a et 5b émettent un rayonnement optique isotrope, vu en coupe transversale. Par conséquent, une partie de ce rayonnement est dirigée contre les parois respectives 46a et 46b, selon les flèches R1. Comme expliqué ci-dessus, ces parois possèdent un revêtement propre à réfléchir ce rayonnement, de sorte que ce dernier est renvoyé à l'opposé de ces parois, selon les flèches R2. De la sorte, sensiblement l'intégralité du rayonnement est émise hors du logement via la fenêtre d'émission 47, selon les flèches R3. On notera qu'il est avantageux de prévoir des parois absorbantes 46' en regard du culot de la lampe, comme montré sur la figure 6. En effet, ces parois absorbantes évitent un renvoi substantiel du rayonnement thermique vers ce culot, de manière à éviter un échauffement de ce dernier qui serait susceptible de l'endommager.

Le rayonnement émis selon R3 traverse ensuite les faces latérales opposées du concentrateur 28, selon les flèches R4, sans subir de déviation substantielle. Il progresse ensuite en direction du réflecteur 26, puis est renvoyé par celui-ci en direction de l'empilement 200, selon les flèches R5. Le rayonnement atteint ensuite (flèches R6) la plaque de protection 204 où il est absorbé puisque, comme vu ci-dessus, cette plaque présente un revêtement absorbant cette énergie de rayonnement.

On notera que, en aval du réflecteur 26, sensiblement la totalité du rayonnement présente une direction verticale. De plus, ce rayonnement est dirigé sur la totalité de l'empilement, mais en revanche aucune fraction substantielle de ce rayonnement n'est envoyée à l'extérieur des bords latéraux de cet empilement. A cet effet on note R6a et R6b la fraction extérieure de ce rayonnement, qui est dirigée au voisinage des bords latéraux précités. Cela est tout particulièrement avantageux, puisque sensiblement toute l'énergie de rayonnement est utilisée pour chauffer l'empilement 200, ce qui évite les pertes énergétiques et assure un rendement optimal.

Par ailleurs les organes mécaniques situés à proximité immédiate de cet empilement ne reçoivent aucune quantité de chaleur substantielle. En d'autres termes, au voisinage des bords latéraux de l'empilement, il existe un fort gradient de température. De la sorte, ces organes mécaniques n'ont pas besoin de présenter une résistance spécifique aux hautes températures, ce qui réduit leur coût de fabrication. En particulier, on peut prévoir de placer les joints d'étanchéité à proximité de la zone de pressage, ce qui réduit l'encombrement global de l'outil, tout en assurant une réalisation de ces joints en un matériau peu coûteux. Cet avantage est tout particulièrement sensible, dans le cas où le pressage est opéré sous vide.

L'utilisation des plaques de protection 204 et 205 est également avantageuse, en termes de rendement énergétique. En effet, en l'absence de telles plaques, on peut supposer que des impuretés, par exemple des poussières, sont présentes sur la face de l'empilement en contact avec le rayonnement optique. Dans ce cas, ces impuretés ont tendance à renvoyer une fraction du rayonnement, et non pas à l'absorber. Cette fraction renvoyée est ensuite dirigée vers le réflecteur 26, où elle se trouve à nouveau renvoyée vers les impuretés, et ainsi de suite. Dans ce cas, cette fraction de rayonnement n'est pas efficace, dans le sens où elle n'est pas utilisée de manière effective pour chauffer l'empilement. Par ailleurs, on notera que la présence de poussières sur la silice mise en pression peut conduire à la fêler, voire à la casser.

Une fois que le volume intérieur de la chambre 300 est placé à la température cible souhaitée, on applique une force de pressage sur les faces opposées de l'empilement 200. Durant l'application de cette force, les socles 25 et 35 forment des organes de transmission des efforts, alors que les blocs 28 et 38 assurent, outre leur fonction optique, une fonction supplémentaire d'organe de pressage.

Cette force est appliquée, tout en maintenant la chambre à une température voisine de la température cible précitée. A titre d'exemple non limitatif, dans le cas d'un assemblage par frittage ou soudure par diffusion, cette force de pressage est comprise entre 100 et 200 MPa. Dans le cas d'un assemblage par collage ou polymérisation, cette force de pressage est comprise entre 5 et 10 MPa. La durée de cette phase de pressage est typiquement comprise entre 5 et 25 minutes. On notera que cette durée est du même ordre, quel que soit le mode d'assemblage mis en œuvre.

En référence à la figure 13, on note que la partie d'outil inférieure 2 délimite deux butées axialement distantes pour le disque 26, respectivement haute 26H et basse 26 B. De façon analogue la partie d'outil supérieure 3 délimite deux butées axialement distantes pour le disque 36, respectivement haute 36H et basse 36 B. On peut alors prévoir que le disque 26 et/ou le disque 36 présente une certaine élasticité, de sorte qu'il peut prendre appui contre l'une ou l'autre des butées précitées. Ces possibilités de débattement axial sont matérialisées par les flèches F26 et F36, sur cette figure 13. L'homme du métier pourra utiliser cette possibilité de débattement pour au moins l'un des disques, afin de réaliser de manière optimale l'opération mécanique de pressage. A cet égard, l'homme du métier pourra aussi prévoir un débattement axial de la semelle 70, matérialisée par la flèche F70 à la figure 12, par rapport au bloc 35.

Une fois que le pressage a été réalisé, on désactive les lampes de manière à faire baisser la température dans la chambre 300. Lorsque cette température atteint une valeur prédéfinie, par exemple voisine de 200°C, on arrête l'unité de mise sous vide, de manière à placer à nouveau le volume intérieur de la chambre 300 à pression atmosphérique. Quand la température de cette chambre est proche de l'ambiante, l'empilement traité selon l'invention est extrait hors de la chambre par le bras de manipulation. Grâce à l'opération de pressage, les couches constitutives de cet empilement présentent la cohésion souhaitée. Cet empilement subit ensuite d'éventuelles opérations postérieures de type connu, notamment la mise en place de revêtements de protection et/ou une découpe et/ou l'ajout de terminaisons électriques.

L'opération de pressage est avantageusement conduite, de manière à ce qu'au moins une couche mince, de préférence toutes les couches minces de la batterie, présente(nt) une porosité inférieure à 20%, de préférence inférieure à 10% et encore plus préférentiellement inférieure à 5%. Un dépôt compact est un dépôt qui ne comporte pas de cavités, ni de fissures. En revanche, il comporte des porosités dont le taux s'exprime en pourcentage et se calcule de la manière suivante :

$$\text{Porosité [\%]} = [(\text{densité du matériau massif} - \text{densité vraie})/\text{densité vraie}] \times 100$$

sachant que la « densité vraie » est la densité mesurée sur la couche déposée et que la densité du matériau massif est la densité massive du matériau déposé, en faisant abstraction de la présence de particules dont l'empilement forme une porosité.

Les batteries obtenues conformément à l'invention, par l'emploi de l'outil de pressage ci-dessus, présentent une forte densité de puissance, lorsque les électrodes sont minces. Elles présentent également une forte densité d'énergie (environ deux fois plus que les batteries à ions de lithium connues), grâce au très faible taux de porosité.

**Revendications**

1. Outil (O1 ; 02) de pressage à chaud destiné à être monté sur une presse, cet outil comprenant :

   - une première partie d'outil (2) équipée de premiers moyens (29 ; 60) de fixation sur un premier plateau de presse (12),
   - une deuxième partie d'outil (3) équipée de deuxièmes moyens (13, 14 ; 70) de fixation sur un deuxième plateau de presse (10),
   - ces deux parties d'outil étant mobiles l'une par rapport à l'autre entre une position éloignée et une position rapprochée, dans laquelle elles délimitent une chambre de pressage (300),
   - des moyens (5) de chauffage du volume intérieur de la chambre de pressage,
   - les première et deuxième parties d'outil étant en outre équipées respectivement d'un premier et deuxième organes de pressage (28, 38), lesquels sont propres à exercer une force de pressage sur des faces opposées d'un objet à presser, reçu dans la chambre de pressage,
   les moyens de chauffage étant des moyens de chauffage par rayonnement optique (5) et comprenant au moins un organe de chauffage (5) par rayonnement optique,
   **caractérisé**
   **en ce que** l'outil comprend en outre des moyens de concentration (26, 28, 36, 38, 46), aptes à concentrer l'énergie de rayonnement en direction dudit objet
   et **en ce que** les moyens de concentration de l'énergie de rayonnement comprennent, pour chaque partie d'outil, un organe de concentration du rayonnement optique (28, 38) et un organe de réflexion du rayonnement optique (26, 36), intercalés sur le trajet du rayonnement entre la fenêtre d'émission (47) et le siège de réception (282) de l'objet à presser, l'organe de concentration du rayonnement optique possédant deux faces frontales opposées, ces deux faces frontales opposées étant reliées par des faces latérales obliques (283), chaque face latérale étant adjacente à un organe de chauffage respectif (5).

2. Outil selon la revendication 1, **caractérisé en ce que** chaque organe de chauffage (5) par rayonnement optique comprend :

   - au moins une lampe à quartz (51),
   - un fourreau (52) de réception de chaque lampe (51),
   - au moins un culot (53, 54) prolongeant axialement ledit fourreau, les parois en regard du culot et du fourreau définissant un espace annulaire apte à être mis en communication avec une source de fluide caloporteur.

3. Outil selon la revendication 1 ou 2, **caractérisé en ce que** l'un des organes de pressage définit un siège polygonal (282), en particulier rectangulaire, de réception dudit objet à presser, et il est prévu un organe de chauffage (5) par rayonnement optique le long de chaque côté de ce siège polygonal.

4. Outil selon l'une des revendications 1 à 3, **caractérisé en ce que** chaque organe de chauffage (5) est reçu dans un logement ouvert (45), définissant une fenêtre (47) d'émission du rayonnement optique.

5. Outil selon la revendication précédente, **caractérisé en ce que** les moyens de concentration comprennent un tronçon de réflexion (46), appartenant aux parois du logement (45) de réception de chaque organe de chauffage, ledit tronçon de réflexion étant placé en regard de la zone rayonnante (51) de l'organe de chauffage, et le revêtement dudit tronçon de réflexion étant apte à renvoyer l'énergie de rayonnement optique.

6. Outil selon la revendication précédente, **caractérisé en ce que** les parois du logement (45) comprennent en outre au moins un tronçon dit d'absorption (46'), en regard d'une zone non rayonnante (54) de l'organe de chauffage, notamment son culot, le revêtement du tronçon d'absorption étant apte à absorber l'énergie de rayonnement.

7. Outil selon l'une quelconque des revendications 4 à 6, **caractérisé en ce qu'**une première partie d'outil (3) est équipée d'un organe annulaire de support (4), délimitant le ou chaque logement (45) de réception d'un organe de chauffage, ledit organe annulaire (4) de support comprenant de préférence une face frontale dite libre (42), apte à venir en butée contre la deuxième partie d'outil (2).

8. Outil selon la revendication précédente, **caractérisé en ce qu'**il est prévu des moyens d'étanchéité entre la face frontale libre et la deuxième partie d'outil, notamment au moins un joint torique (42") reçu dans au moins une gorge (42') ménagée dans ladite face frontale libre (42).

9. Outil selon la revendication 8, **caractérisé en ce que** l'organe annulaire (4) de support est creusé d'au moins une échancrure (48), permettant l'accès à un logement (45) de réception respectif, depuis la face externe (44) de cet organe de support.

10. Outil selon l'une quelconque des revendications 7 à 9, **caractérisé en ce que** l'organe annulaire de support (4) est muni d'au moins un volet (48') de fermeture de chaque échancrure, fixé de manière amovible sur ladite face externe (44).

11. Outil selon l'une des revendications 1 à 10, **caractérisé en ce qu'**il comprend des moyens (2E, 42E) de positionnement transversal, permettant de positionner mutuellement les deux parties d'outil selon une direction transversale par rapport à la direction de pressage,
lesdits moyens de positionnement transversal comprenant de préférence des épaulements complémentaires (2E, 42E), ménagés respectivement sur l'anneau de support (4) et sur la deuxième partie d'outil (2).

12. Outil selon l'une des revendications précédentes, **caractérisé en ce que** l'organe de concentration du rayonnement optique (28, 38) est réalisé en silice.

13. Outil selon l'une des revendications précédentes, **caractérisé en ce que** chaque organe de concentration du rayonnement optique (28, 38) forme organe de pressage, la face frontale supérieure de l'organe inférieur de concentration du rayonnement optique formant le siège de réception (282).

14. Outil selon l'une des revendications précédentes, **caractérisé en ce que** l'organe de réflexion du rayonnement optique (26, 36) est disposé contre une face frontale (281) dudit organe de concentration du rayonnement optique (28, 38).

15. Outil selon la revendication 14, **caractérisé en ce que** l'organe de réflexion du rayonnement optique (26, 36) est réalisé en aluminium poli.

16. Outil selon l'une des revendications précédentes, **caractérisé en ce qu'**il comprend en outre des moyens (49) de mise sous atmosphère contrôlée de la chambre de pressage (300), aptes à être connectés à une source d'alimentation en gaz neutre et/ou à une source de dépression.

17. Outil selon l'une des revendications précédentes, **caractérisé en ce que** les moyens de fixation de chaque partie d'outil sur un plateau de presse respectif sont des moyens de fixation amovible de type mécanique, notamment par vissage (13, 14, 29).

18. Outil selon l'une des revendications 1 à 16, **caractérisé en ce que** les moyens de fixation de chaque partie d'outil sur un plateau de presse respectif sont des moyens de fixation amovible de type magnétique (60, 70).

19. Procédé de mise en oeuvre d'un outil de pressage selon l'une quelconque des revendications précédentes, dans lequel :

- on place les deux parties d'outil (2, 3) dans leur position mutuellement éloignée,
- on dispose au moins un objet à presser (200) sur le siège de pressage (282),
- on déplace les parties d'outil vers leur position mutuellement rapprochée, de manière à délimiter une chambre de pressage (300) et à confiner ledit objet dans ladite chambre de pressage,
- on chauffe le volume intérieur de cette chambre, jusqu'à une température cible,
- on exerce une pression sur les faces opposées dudit objet, tout en maintenant le volume intérieur de cette chambre à une température voisine de la température cible.

**20.** Procédé selon la revendication précédente, dans lequel on place le volume intérieur de cette chambre de pressage à une pression très inférieure à la pression atmosphérique, par exemple à une pression inférieure ou égale à $10^{-3}$ mbar.

**21.** Procédé selon la revendication 19 ou 20, dans lequel on admet un gaz, notamment un gaz neutre, dans le volume intérieur de cette chambre de pressage.

**22.** Procédé selon l'une des revendications 19 à 21, dans lequel on recouvre au moins une des faces opposées (201, 202) dudit objet (200) au moyen d'un élément de protection mécanique (204, 205), propre en outre à absorber l'énergie de rayonnement optique, en particulier d'une plaque de protection présentant un revêtement de couleur sombre.

**23.** Procédé selon l'une des revendications 19 à 22, dans lequel l'objet est un empilement comprenant au moins une cellule élémentaire, dont chacune est formée d'une couche d'anode, d'une couche de cathode et d'une couche intermédiaire d'électrolyte solide.

**24.** Procédé selon l'une des revendications 19 à 23, dans lequel on porte le volume intérieur de cette chambre à une température comprise entre 400 et 700°C et on exerce sur les faces opposées dudit objet une pression comprise entre 100 et 200 MPa.

**25.** Procédé selon l'une des revendications 19 à 23, dans lequel on porte le volume intérieur de cette chambre à une température comprise entre 100 et 200°C et on exerce sur les faces opposées dudit objet une pression comprise entre 5 et 10 MPa.

**26.** Procédé selon l'une des revendications 19 à 25, pour la mise en oeuvre d'un outil selon la revendication 17, dans lequel on fixe séparément de manière mécanique chaque partie d'outil sur un plateau de presse respectif.

**27.** Procédé selon l'une des revendications 19 à 25, pour la mise en oeuvre d'un outil selon la revendication 18, dans lequel on fixe de manière magnétique les deux parties d'outil sur un premier plateau de presse, on rapproche le deuxième plateau de presse de manière à fixer de manière magnétique la deuxième partie d'outil sur ce deuxième plateau, et on éloigne le deuxième plateau de presse par rapport au premier plateau de presse, de manière à éloigner mutuellement les deux parties d'outil.

**28.** Procédé selon l'une des revendications 19 à 27, dans lequel on dispose plusieurs objets à presser, les uns au-dessus des autres, entre les organes de pressage dudit outil de pressage.

**29.** Procédé selon l'une des revendications 19 à 28, dans lequel on dispose plusieurs outils de pressage, les uns au-dessus des autres, entre les premier et deuxième plateaux de la presse.

**30.** Installation de fabrication d'objets comprenant :

- un outil de pressage (01 ; 02) selon l'une quelconque des revendications 1 à 18,
- des premier et deuxième plateaux de presse (10, 12),
- des moyens (106) de contrôle/commande de l'outil de pressage et des plateaux de presse,
- des moyens de manipulation (112, 114), propres à placer les objets à presser sur le siège de pressage de l'outil de pressage, puis à extraire les objets une fois pressés hors dudit siège de pressage.

**31.** Installation de fabrication d'objets selon la revendication précédente, **caractérisée en ce qu'**elle comprend en outre une source de dépression (110) et/ou une source de gaz (111) apte(s) à être connectée(s) aux moyens (49) de mise sous atmosphère contrôlée de la chambre de pressage.

**32.** Procédé de fabrication d'une batterie à ions de lithium entièrement solide, à l'aide d'une installation selon l'une des revendications 30 ou 31, dans lequel :

- on place un empilement comprenant au moins une cellule élémentaire, dont chacune est formée d'une couche d'anode, d'une couche de cathode et d'une couche intermédiaire d'électrolyte solide, sur le siège de pressage, grâce aux moyens de manipulation ;
- on presse à chaud ledit empilement au moyen dudit outil de pressage ;

- on extrait ledit empilement une fois pressé hors dudit siège de pressage, grâce aux moyens de manipulation ;
- on soumet éventuellement ledit empilement pressé à au moins une opération postérieure de finition, de façon à obtenir ladite batterie à ions de lithium entièrement solide.

## Patentansprüche

1. Presswerkzeug (O1; O2) zum Heißpressen, das zum Anbringen an einer Presse bestimmt ist, wobei dieses Werkzeug umfasst:

   - einen ersten Werkzeugteil (2), der mit ersten Befestigungsmitteln (29; 60) an einer ersten Pressplatte (12) ausgestattet ist,
   - einen zweiten Werkzeugteil (3), der mit zweiten Befestigungsmitteln (13, 14; 70) an einer zweiten Pressplatte (10) ausgestattet ist,
   - wobei diese beiden Werkzeugteile im Verhältnis zueinander zwischen einer entfernten Position und einer angenäherten Position, in der sie eine Presskammer (300) begrenzen, beweglich sind,
   - Heizmittel (5) des Innenvolumens der Presskammer,
   - wobei der erste und der zweite Werkzeugteil ferner jeweils mit einem ersten und einem zweiten Pressorgan (28, 38) ausgestattet sind, die in der Lage sind, eine Presskraft auf die gegenüberliegenden Seiten eines zu pressenden Objekts auszuüben, das in der Presskammer empfangen ist,
   wobei die Heizmittel Heizmittel durch optische Strahlung (5) sind und mindestens ein Heizorgan (5) durch optische Strahlung umfassen,
   **dadurch gekennzeichnet, dass** das Werkzeug ferner Konzentrationsmittel (26, 28, 36, 38, 46) umfasst, die imstande sind, die Strahlungsenergie in Richtung des Objekts zu konzentrieren
   und dass die Konzentrationsmittel der Strahlungsenergie für jeden Werkzeugteil ein Konzentrationsorgan der optischen Strahlung (28, 38) und ein Reflexionsorgan der optischen Strahlung (26, 36) umfassen, die auf dem Strahlungsweg zwischen dem Sendefenster (47) und dem Empfangssitz (282) des zu pressenden Objekts angeordnet sind, wobei das Konzentrationsorgan der optischen Strahlung zwei gegenüberliegende Frontflächen besitzt, wobei diese zwei gegenüberliegenden Frontflächen durch schräge Seitenflächen (283) verbunden sind, wobei jede Seitenfläche einem jeweiligen Heizorgan (5) benachbart ist.

2. Werkzeug nach Anspruch 1, **dadurch gekennzeichnet, dass** jedes Heizorgan (5) durch optische Strahlung umfasst:

   - mindestens eine Quarzlampe (51),
   - eine Empfangshülle (52) für jede Lampe (51),
   - mindestens einen Sockel (53, 54), der die Hülle axial verlängert, wobei die dem Sockel und der Hülle zugewandten Wände einen ringförmigen Raum definieren, der imstande ist, mit einer Wärmeträgerfluidquelle in Kommunikation versetzt zu werden.

3. Werkzeug nach Anspruch 1 oder 2, **dadurch gekennzeichnet, dass** eins der Pressorgane einen polygonalen, vor allem rechteckigen Sitz (282) zum Empfang des zu pressenden Objekts definiert und ein Heizorgan (5) durch optische Strahlung entlang jeder Seite dieses polygonalen Sitzes vorgesehen ist.

4. Werkzeug nach einem der Ansprüche 1 bis 3, **dadurch gekennzeichnet, dass** jedes Heizorgan (5) in einer offenen Aufnahme (45) empfangen ist, die ein Sendefenster (47) der optischen Strahlung definiert.

5. Werkzeug nach vorangehendem Anspruch, **dadurch gekennzeichnet, dass** die Konzentrationsmittel einen Reflexionsabschnitt (46) umfassen, der zu den Wänden der Empfangsaufnahme (45) jedes Heizorgans gehört, wobei der Reflexionsabschnitt dem Strahlungsbereich (51) des Heizorgans zugewandt platziert ist, und die Beschichtung des Reflexionsabschnitts imstande ist, die optische Strahlungsenergie zurückzusenden.

6. Werkzeug nach vorangehendem Anspruch, **dadurch gekennzeichnet, dass** die Wände der Aufnahme (45) ferner mindestens einen Absorptionsabschnitt (46') umfassen, der einem nicht strahlenden Bereich (54) des Heizorgans, insbesondere seinem Sockel, zugewandt ist, wobei die Beschichtung des Absorptionsabschnitts imstande ist, die Strahlungsenergie zu absorbieren.

7. Werkzeug nach einem der Ansprüche 4 bis 6, **dadurch gekennzeichnet, dass** ein erster Werkzeugteil (3) mit einem ringförmigen Stützorgan (4) ausgestattet ist, das die oder jede Empfangsaufnahme (45) eines Heizorgans begrenzt, wobei das ringförmige Stützorgan (4) vorzugsweise eine sogenannte freie Frontfläche (42) umfasst, die imstande ist, am zweiten Werkzeugteil (2) anzustoßen.

8. Werkzeug nach vorangehendem Anspruch, **dadurch gekennzeichnet, dass** Dichtungsmittel zwischen der freien Frontfläche und dem zweiten Werkzeugteil vorgesehen sind, insbesondere mindestens eine torische Dichtung (42''), die in mindestens einer Nut (42') empfangen ist, die in der freien Frontfläche (42) eingerichtet ist.

9. Werkzeug nach Anspruch 8, **dadurch gekennzeichnet, dass** in das ringförmige Stützorgan (4) mindestens eine Aussparung (48) eingearbeitet ist, wodurch der Zugang zu einer jeweiligen Empfangsaufnahme (45) von der Außenfläche (44) dieses Stützorgans gestattet wird.

10. Werkzeug nach einem der Ansprüche 7 bis 9, **dadurch gekennzeichnet, dass** das ringförmige Stützorgan (4) mit mindestens einer Verschlussklappe (48') jeder Aussparung versehen ist, die lösbar an der Außenfläche (44) befestigt ist.

11. Werkzeug nach einem der Ansprüche 1 bis 10, **dadurch gekennzeichnet, dass** es Querpositionierungsmittel (2E, 42E) umfasst, die es gestatten, die beiden Werkzeugteile gegenseitig in einer transversalen Richtung im Verhältnis zur Pressrichtung zu positionieren,
wobei die Querpositionierungsmittel vorzugsweise komplementäre Absätze (2E, 42E) umfassen, die jeweils auf dem Stützring (4) und auf dem zweiten Werkzeugteil (2) eingerichtet sind.

12. Werkzeug nach einem der vorangehenden Ansprüche, **dadurch gekennzeichnet, dass** das Konzentrationsorgan der optischen Strahlung (28, 38) aus Silizium hergestellt ist.

13. Werkzeug nach einem der vorangehenden Ansprüche, **dadurch gekennzeichnet, dass** jedes Konzentrationsorgan der optischen Strahlung (28, 38) ein Pressorgan bildet, wobei die obere Frontfläche des unteren Konzentrationsorgans der optischen Strahlung den Empfangssitz (282) bildet.

14. Werkzeug nach einem der vorangehenden Ansprüche, **dadurch gekennzeichnet, dass** das Reflexionsorgan der optischen Strahlung (26, 36) an einer Frontfläche (281) des Konzentrationsorgans der optischen Strahlung (28, 38) angeordnet ist.

15. Werkzeug nach Anspruch 14, **dadurch gekennzeichnet, dass** das Reflexionsorgan der optischen Strahlung (26, 36) aus poliertem Aluminium hergestellt ist.

16. Werkzeug nach einem der vorangehenden Ansprüche, **dadurch gekennzeichnet, dass** es ferner Mittel (49) umfasst, um die Presskammer (300) unter kontrollierte Atmosphäre zu versetzen, die imstande sind, an eine Quelle zur Versorgung mit neutralem Gas und/oder eine Unterdruckquelle angeschlossen zu werden.

17. Werkzeug nach einem der vorangehenden Ansprüche, **dadurch gekennzeichnet, dass** die Befestigungsmittel jedes Werkzeugteils auf einer jeweiligen Pressplatte lösbare Befestigungsmittel mechanischen Typs, insbesondere durch Schrauben (13, 14, 29), sind.

18. Werkzeug nach einem der Ansprüche 1 bis 16, **dadurch gekennzeichnet, dass** die Befestigungsmittel jedes Werkzeugteils auf einer jeweiligen Pressplatte lösbare Befestigungsmittel magnetischen Typs (60, 70) sind.

19. Verfahren zur Implementierung eines Presswerkzeugs nach einem der vorangehenden Ansprüche, wobei:

- die beiden Werkzeugteile (2, 3) in ihrer gegenseitig entfernen Position platziert werden,
- mindestens ein zu pressendes Objekt (200) auf dem Presssitz (282) angeordnet wird,
- die Werkzeugteile in ihre gegenseitig angenäherte Position derart verlagert werden, dass eine Presskammer (300) begrenzt und das Objekt in der Presskammer eingeschlossen wird,
- das Innenvolumen dieser Kammer auf eine Zieltemperatur erwärmt wird,
- ein Druck auf die gegenüberliegenden Flächen des Objekts bei Beibehaltung des Innenvolumens dieser Kammer auf einer Temperatur in der Nähe der Zieltemperatur ausgeübt wird.

20. Verfahren nach vorangehendem Anspruch, wobei das Innenvolumen dieser Presskammer auf einen Druck sehr unterhalb des atmosphärischen Drucks, beispielsweise auf einen Druck von unter oder gleich $10^{-3}$ mbar, gebracht

wird.

21. Verfahren nach Anspruch 19 oder 20, wobei ein Gas, insbesondere ein neutrales Gas, in das Innenvolumen dieser Presskammer geleitet wird.

22. Verfahren nach einem der Ansprüche 19 bis 21, wobei mindestens eine der gegenüberliegenden Flächen (201, 202) des Objekts (200) mit einem mechanischen Schutzelement (204, 205) abgedeckt wird, das ferner in der Lage ist, die optische Strahlungsenergie zu absorbieren, vor allem mit einer Schutzplatte, die eine Beschichtung in einer dunklen Farbe aufweist.

23. Verfahren nach einem der Ansprüche 19 bis 22, wobei das Objekt ein Stapel ist, der mindestens eine elementare Zelle umfasst, von denen jede von einer Anodenschicht, einer Kathodenschicht und einer Zwischenschicht aus einem festen Elektrolyten gebildet ist.

24. Verfahren nach einem der Ansprüche 19 bis 23, wobei das Innenvolumen dieser Kammer auf eine Temperatur zwischen 400 und 700°C gebracht wird und auf die gegenüberliegenden Flächen des Objekts ein Druck zwischen 100 und 200 MPa ausgeübt wird.

25. Verfahren nach einem der Ansprüche 19 bis 23, wobei das Innenvolumen dieser Kammer auf eine Temperatur zwischen 100 und 200°C gebracht wird und auf die gegenüberliegenden Flächen des Objekts ein Druck zwischen 5 und 10 MPa ausgeübt wird.

26. Verfahren nach einem der Ansprüche 19 bis 25 für die Implementierung eines Werkzeugs nach Anspruch 17, wobei jeder Werkzeugteil auf einer jeweiligen Pressplatte separat mechanisch befestigt wird.

27. Verfahren nach einem der Ansprüche 19 bis 25 für die Implementierung eines Werkzeugs nach Anspruch 18, wobei die beiden Werkzeugteile auf einer ersten Pressplatte magnetisch befestigt werden, die zweite Pressplatte derart angenähert wird, dass der zweite Werkzeugteil auf dieser zweiten Platte magnetisch befestigt wird und die zweite Pressplatte im Verhältnis zur ersten Pressplatte derart beabstandet wird, dass die beiden Werkzeugteile gegenseitig beabstandet werden.

28. Verfahren nach einem der Ansprüche 19 bis 27, wobei mehrere zu pressende Objekte übereinander zwischen den Pressorganen des Presswerkzeugs angeordnet werden.

29. Verfahren nach einem der Ansprüche 19 bis 28, wobei mehrere Presswerkzeug übereinander zwischen der ersten und zweiten Pressplatte angeordnet werden.

30. Anlage zur Herstellung von Objekten, umfassend:

   - ein Presswerkzeug (O1; O2) nach einem der Ansprüche 1 bis 18,
   - eine erste und zweite Pressplatte (10, 12),
   - Kontroll-/Steuermittel (106) des Presswerkzeugs und der Pressplatten,
   - Handhabungsmittel (112, 114), die imstande sind, die zu pressenden Objekte auf dem Presssitz des Presswerkzeugs zu platzieren, dann die Objekte nach dem Pressen vom Presssitz zu entfernen.

31. Anlage zur Herstellung von Objekten nach vorangehendem Anspruch, **dadurch gekennzeichnet, dass** sie ferner eine Unterdruckquelle (110) und/oder eine Gasquelle (111) umfasst, die imstande ist/sind, an die Mittel (49) zum Versetzen der Presskammer unter kontrollierte Atmosphäre angeschlossen zu werden.

32. Verfahren zur Herstellung einer vollkommen festen Lithium-Ionen-Batterie mit Hilfe einer Anlage nach einem der Ansprüche 30 oder 31, wobei:

   - ein Stapel, der mindestens eine elementare Zelle umfasst, von denen jede von einer Anodenschicht, einer Kathodenschicht und einer Zwischenschicht aus einem festen Elektrolyten gebildet ist, mit den Handhabungsmitteln auf dem Presssitz platziert wird;
   - der Stapel mit dem Presswerkzeug warmgepresst wird;
   - der gepresste Stapel mit den Handhabungsmitteln aus dem Presssitz entfernt wird;
   - der gepresste Stapel mindestens einer nachfolgenden Endbearbeitung unterzogen wird, um die vollkommen feste Lithium-Ionen-Batterie zu erhalten.

**Claims**

1. A hot-pressing tool (O1; O2) intended to be mounted on a press, this tool comprising:

   - a first tool portion (2) equipped with first means (29; 60) for fastening onto a first press platen (12),
   - a second tool portion (3) equipped with second means (13, 14; 70) for fastening onto a second press platen (10),
   - these two tool portions being mobile with respect to one another between a distant position and a close position, in which they define a pressing chamber (300),
   - means (5) for heating the inner volume of the pressing chamber,
   - the first and second tool portions further being respectively equipped with a first and a second pressing member (28, 38), which are suitable for exerting a pressing force on opposite faces of an object to be pressed, received in the pressing chamber,
   - the heating means being means for heating by optical radiation (5) and comprising at least one heating member (5) by optical radiation,
   **characterized in that** the tool further comprises concentration means (26, 28, 36, 38, 46), capable of concentrating the radiation energy in the direction of said object
   and **in that** the means for concentrating the radiation energy comprise, for each tool portion, a member (28, 38) for concentrating the optical radiation and a member (26, 36) for reflecting the optical radiation, interposed along the trajectory of the radiation between the emission opening (47) and the seat (282) for receiving the object to be pressed, the member for concentrating the optical radiation having two opposite front faces, these two opposite front faces being connected by oblique lateral faces (283), each lateral face being adjacent to a respective heating member (5).

2. The tool according to claim 1, **characterized in that** each member (5) for heating via optical radiation comprises:

   - at least one quartz lamp (51),
   - a sleeve (52) for receiving each lamp (51),
   - at least one cap (53, 54) axially extending said sleeve, the facing walls of the cap and of the sleeve defining an annular space capable of being placed in communication with a source of heat-transfer fluid.

3. The tool according to claim 1 or 2, **characterized in that** one of the pressing members defines a polygonal seat (282), in particular rectangular, for receiving said object to be pressed, and a member (5) for heating via optical radiation is provided along each side of this polygonal seat.

4. The tool according to any of claims 1 to 3, **characterized in that** each heating member (5) is received in an open housing (45), defining an opening (47) for emission of the optical radiation.

5. The tool according to the preceding claim, **characterized in that** the concentration means comprise a reflection section (46), belonging to the walls of the housing (45) for receiving each heating member, said reflection section being placed facing the radiating zone (51) of the heating member, and the coating of said reflection section being capable of sending back the optical-radiation energy.

6. The tool according to the preceding claim, **characterized in that** the walls of the housing (45) further comprise at least one section called absorption section (46'), facing a non-radiating zone (54) of the heating member, in particular its cap, the coating of the absorption section being suitable for absorbing the radiation energy.

7. The tool according to any one of claims 4 to 6, **characterized in that** a first tool portion (3) is equipped with an annular supporting member (4), defining the or each housing (45) for receiving a heating member, said annular supporting member (4) preferably comprising a front face called free front face (42), capable of being stopped against the second tool portion (2).

8. The tool according to the preceding claim, **characterized in that** sealing means are provided between the free front face and the second tool portion, in particular at least one O-ring (42") received in at least one groove (42') arranged in said free front face (42).

9. The tool according to claim 8, **characterized in that** the annular supporting member (4) is hollowed out by at least one cutout (48), allowing access to a respective reception housing (45), from the outer face (44) of this supporting member.

10. The tool according to any one of claims 7 to 9, **characterized in that** the annular supporting member (4) is provided with at least one shutter (48') for closing each cutout, removably fastened onto said outer face (44).

11. The tool according to any of claims 1 to 10, **characterized in that** it comprises transverse-positioning means (2E, 42E), allowing to mutually position the two tool portions in a direction transverse with respect to the pressing direction, said transverse-positioning means preferably comprising complementary shoulders (2E, 42E), respectively arranged on the supporting ring (4) and on the second tool portion (2).

12. The tool according to any of the preceding claims, **characterized in that** the member (28, 38) for concentrating the optical radiation is made from silica.

13. The tool according to any of the preceding claims, **characterized in that** each member (28, 38) for concentrating the optical radiation forms a pressing member, the upper front face of the lower member for concentrating the optical radiation forming the reception seat (282).

14. The tool according to any of the preceding claims, **characterized in that** the member (26, 36) for reflecting the optical radiation is disposed against a front face (281) of said member (28, 38) for concentrating the optical radiation.

15. The tool according to claim 14, **characterized in that** the member (26, 36) for reflecting the optical radiation is made from polished aluminum.

16. The tool according to any of the preceding claims, **characterized in that** it further comprises means (49) for placing the pressing chamber (300) under a controlled atmosphere, capable of being connected to a source for supplying inert gas and/or a source of vacuum.

17. The tool according to any of the preceding claims, **characterized in that** the means for fastening each tool portion onto a respective press platen are means for removable fastening of the mechanical type, in particular by screwing (13, 14, 29).

18. The tool according to any of claims 1 to 16, **characterized in that** the means for fastening each tool portion onto a respective press platen are means for removable fastening of the magnetic type (60, 70).

19. A method for implementing a pressing tool according to any one of the preceding claims, wherein:

- the two tool portions (2, 3) are placed in their mutually distant position,
- at least one object to be pressed (200) is disposed on the pressing seat (282),
- the tool portions are moved towards their mutually close position, in such a way as to define a pressing chamber (300) and confine said object in said pressing chamber,
- the inner volume of this chamber is heated, up to a target temperature,
- a pressure is exerted on the opposite faces of said object, while maintaining the inner volume of this chamber at a temperature close to the target temperature.

20. The method according to the preceding claim, wherein the inner volume of this pressing chamber is placed at a pressure much lower than atmospheric pressure, for example at a pressure less than or equal to $10^{-3}$ mbar.

21. The method according to claim 19 or 20, wherein a gas, in particular an inert gas, is let into the inner volume of this pressing chamber.

22. The method according to any of claims 19 to 21, wherein at least one of the opposite faces (201, 202) of said object (200) is covered by means of a mechanical protective element (204, 205), further suitable for absorbing the optical-radiation energy, in particular a protective plate having a dark-colored coating.

23. The method according to any of claims 19 to 22, wherein the object is a stack comprising at least one elementary cell, each of which is formed by an anode layer, a cathode layer and an intermediate layer of solid electrolyte.

**24.** The method according to any of claims 19 to 23, wherein the inner volume of this chamber is brought to a temperature between 400 and 700°C and a pressure between 100 and 200 MPa is exerted on the opposite faces of said object.

**25.** The method according to any of claims 19 to 23, wherein the inner volume of this chamber is brought to a temperature between 100 and 200°C and a pressure between 5 and 10 MPa is exerted on the opposite faces of said object.

**26.** The method according to any of claims 19 to 25, for implementing a tool according to claim 17, wherein each tool portion is separately mechanically fastened onto a respective press platen.

**27.** The method according to any of claims 19 to 25, for implementing a tool according to claim 18, wherein the two tool portions are magnetically fastened onto a first press platen, the second press platen is brought closer in such a way as to magnetically fasten the second tool portion onto this second platen, and the second press platen is moved away from the first press platen, in such a way as to mutually move the two tool portions away from each other.

**28.** The method according to any of claims 19 to 27, wherein a plurality of objects to be pressed are disposed, on top of each other, between the pressing members of said pressing tool.

**29.** The method according to any of claims 19 to 28, wherein a plurality of pressing tools are disposed, on top of each other, between the first and second press platens.

**30.** A facility for manufacturing objects comprising:

- a pressing tool (O1; O2) according to any one of claims 1 to 18,
- a first and a second press platen (10, 12),
- means (106) for controlling/driving the pressing tool and the press platens,
- manipulation means (112, 114), suitable for placing the objects to be pressed onto the pressing seat of the pressing tool, then for extracting the objects, once pressed, out of said pressing seat.

**31.** The facility for manufacturing objects according to the preceding claim, **characterized in that** it further comprises a source (110) of vacuum and/or a source (111) of gas, suitable for being connected to the means (49) for placing the pressing chamber under a controlled atmosphere.

**32.** A method for manufacturing an all-solid lithium-ion battery, using an facility according to any of claims 30 or 31, wherein:

- a stack comprising at least one elementary cell, each of which is formed by an anode layer, a cathode layer and an intermediate layer of solid electrolyte, is placed on the pressing seat, via the manipulation means;
- said stack is hot pressed by means of said pressing tool;
- once pressed, said stack is extracted out of said pressing seat, via the manipulation means;
- said pressed stack is optionally subjected to at least one later finishing operation, in such a way as to obtain said all-solid lithium-ion battery.

**Fig. 1**

**Fig. 8**

**Fig. 2**

**Fig. 3**

EP 3 504 057 B1

**Fig. 4**

Fig. 5

EP 3 504 057 B1

**Fig. 6**

EP 3 504 057 B1

**Fig. 7**

**Fig. 11**

Fig. 9

Fig. 10

Fig. 12

**Fig. 13**

**Fig. 14**

-10-

O2 { 3
     2

-12-

**Fig. 15**

-10-

3

2

-12-

↑ F12

**Fig. 16**

-10-

3

E

2

-12-

↓ F'12

**Fig. 17**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 103158252 B
- CN 101758638
- JP 5576636 B
- EP 2251188 A
- CN 101468370 B
- US 7473088 B
- FR 2956523

- US 7695865 B
- US 2016183327 A
- DE 202006008399
- US 2312232 A
- US 2005284320 A
- US 2010104682 A
- FR 2956523 A